# EUROPEAN PATENT SPECIFICATION

(11) **EP 1 613 442 B1**
(45) Date of publication and mention of the grant of the patent: **15.10.2008**
(21) Application number: 04726070.8
(22) Date of filing: 07.04.2004
(51) Int. Cl.: B32B 15/08

(54) **REFLECTIVE FILM**
SPIEGELFOLIE
FILM REFLECHISSANT

(30) Priority: 07.04.2003 CA 2424630
(43) Date of publication of application: 11.01.2006
(73) Proprietor: MARKO I. R. D. C. INC., Saint Leonard, Quebec H1R 3H2 (CA)
(72) Inventor: LEFEBVRE, Julien, Le Gardeur, Quebec J5Z 3A3 (CA); FROHLICH, Mark, Dollard-Des-Ormeaux, Quebec H1A 1X2 (CA); LEPLATOIS, Ludovic, Montreal, Quebec H2M 1Y3 (CA); TAMBAY, Roger, Rosemere, Quebec J7A 4H6 (CA)
(74) Representative: Keen, Celia Mary
(86) International application number: PCT/CA2004/000521
(87) International publication number: WO 2004/089565

(56) References cited:
- WO-A-00/15924
- WO-A-94/18003
- US-B1- 6 286 280

## Description

### FIELD OF THE INVENTION

The present invention pertains to the field of reflective films. In particular, the present invention pertains to reflective films comprising a layer of Aluminum foil.

### BACKGROUND

Roof decking is typically made from sheets of plywood, oriented strand board (OSB) or the like, which are nailed or otherwise fastened to structural members, such as rafters, defining the roof of a building. This structure provides little insulation, the insulative properties of the roof structure being limited to that of the materials themselves. Typically, efforts to improve the insulative or heat emitting properties of the roof have been limited to application of insulative materials to the exterior of the roof decking under the water-shedding materials, or of insulative or reflective materials below the roof decking.

Improvements to the typical methods for increasing the insulative or heat emitting properties of roof structures have resulted in the production of radiant sheathing materials. For example, U.S. Patent No. 5,231,814 provides a decking or sheathing material for roofing that includes a sheet of plywood or OSB with a reflective layer of foil material attached thereto. The foil material may include a layer of kraft paper backing in addition to a layer of metallic foil, such as Aluminum. The foil layer may be perforated to eliminate problems associated with trapped moisture in the structural materials made of wood. The perforations permit the materials to "breathe".

Despite the improved insulative and reflective properties provided by such material, there are numerous drawbacks associated with the construction of sheathing materials similar to those disclosed in U.S. Patent No. 5,231,814. The construction of such materials requires that an adhesive be used to attach the foil material to the structural material. This requires a reliable method for producing uniform adhesion of the foil material to the structural material, which is not often possible. Products of this type are often characterized by defects as a result of non-uniform adhesion of the foil material. Furthermore, the process for adhering the foil material to the structural material, such as OSB, which is heated during its production, requires that the structural material be cooled prior to adhesion. This can add a significant amount of time to the manufacturing process.

A common problem of the kraft paper, which is a material disclosed in US Patent No. 5,231,814 is that it deteriorates when the board is left outside, unprotected from rain and humidity while on the construction site or on when applied as a roofing structure but before shingles are installed.

It is also known, in building constructions such as residential stud wall framing, to provide an air barrier in order to substantially reduce or prevent air infiltration into or out of the building envelope. Use of a vapour barrier is also known to prevent moisture present in the building interior from passing into insulation that has been applied to the structure. In cold climates, the vapour barrier prevents ingress and subsequent freezing of any moisture in the insulation installed in the stud wall cavities. The use of air barriers and vapour barriers is mandated by many building codes. In warm climates, the radiant sheathing prevents heat radiant or IR beams from penetrating the attic. This is known to reduce attic temperatures by as much as 30°F and, in turn, reduce heat load of the house interior and therefore reduce electricity consumption by air-conditioning units.

It is known that the air barrier may be comprised of sheathing on the exterior of a stud wall structure, or may be combined with the vapour barrier on the interior of the stud wall structure. Typically, a combined air and vapour barrier has been formed from polyethylene or polypropylene film of varying thickness, typically 6 to 8 mils.

In a conventional stud wall structure, therefore, typically there will be positioned an exterior sheathing material. The sheathing is attached to a stud wall structure comprising top and bottom plates and intermediate vertical studs, typically of 4-6 inch thickness. Countries having seasonally cold climates normally utilize insulation in the walls to prevent loss of heat during the cold seasons. Accordingly insulation such as glass fiber or rock wool material is inserted between the studs. A vapour barrier of polyethylene film is glued or stapled to the interior of the stud wall face, and an interior finishing material such as gypsum board, plaster board or other panelling material is applied directly over the vapour barrier. In the type of construction described above, the mechanical structure as well as vapour and air barriers required by typical building codes is provided. However, this minimal structure is subject to degradation over time, and does not provide other attributes, which may be desirable in residential construction.

International publication no. WO-A-00/15924 discloses a roofing element having an upper and low layer made of metal sheet. The upper and lower layers are attached to each other by an intermediate layer of a polymer film. Preferably the polymer film is LDPE.

International publication no. WO-A-94/18003 relates to plastic substrates for functional metals such as silver, copper and gold. Adhesion of the metal can be improved by employing a thin layer of a metal having an oxide heat of formation of less than -50,000 calories/gram atom of metal.

US patent no. US 6,286,280 discloses flame-retardant composite sheathing including a core layer having a plurality of superposed layers of a water-resistant paperboard adhered together by layers of an adhesive. Other layers comprise polyolefin, metal foil and water-resistant liner board.

A need remains for a reflective film that is capable of being laminated to construction materials without the use of adhesive.

This background information is provided for the purpose of making known information believed by the applicant to be of possible relevance to the present invention. No admission is necessarily intended, nor should be construed, that any of the preceding information constitutes prior art again the present invention.

### SUMMARY OF INVENTION

An object of the present invention is to provide a reflective film. In accordance with an aspect of the present invention, there is provided a reflective film for adhesion to a construction material, which reflective film comprises a layer of converter grade Aluminum foil having a thickness of between about 0.00635 µm (0.00025 mil) and about 51 µm (2 mil) adhered to one surface of a polymer film or film composite, said polymer film or film composite having a surface energy of at least 350 µN (35 dynes) and consisting of:
a. a first outer portion suitable for adhesion to the construction material consisting of either
   (1) one or more layers of:
      (i) a metallocene-catalyzed polyethylene with density below 0.907 g/cm³ and a melt index between 0.5 and 30 g/10 min;
      (ii) an ethylene vinyl acetate copolymer (EVA) having a vinyl acetate content between 2 and 30 % and a melt index between 0.5 and 30 g/10 min;
      (iii) an acid/acrylate or anhydride modified ethylene vinyl acetate copolymer having a melt index between 0.5 and 30 g/10 min;
      (iv) an acid or anhydride modified ethylene acrylate copolymer having a melt index between 0.5 and 30 g/10 min;
      (v) an ethylene butyl-, ethyl-or methyl-acrylate copolymer (EBA, EEA or EMA) having a melt index between 0.5 and 30 g/10 min;
      (vi) a terpolymer of ethylene, butyl-acrylate and glycidylmethacrylate (E/nBA/GMA) having a melt index between 0.5 and 30 g/10 min;
      (vii) an ethylene acrylic acid and methacrylic acid copolymer having a melt index between 0.5 and 30 g/10 min ;
      (viii) an ionomer of ethylene, methacrylic acid (E/MAA) having a melt index between 0.5 and 30 g/10 min;
      (ix) a maleic anhydride grafted polyethylene or ethylene copolymer having a melt index between 0.5 and 30 g/10 min;
      (x) a combination of one or more of (i), (ii), (iii), (iv), (v), (vi), (vii), (viii), or (ix),
         alone or blended with between 0 and 80 % low density polyethylene or linear low density polyethylene having a melt index between 0.3 and 30 g/10 min; or
   (2) one or more layers of linear low density polyethylene having a melt index between 0.3 and 30 g/10 min alone or blended with between 0 and 80 % by low density polyethylene; and
      b. a second outer portion adhered to the layer of Aluminum foil and consisting of one or more layers of:
         (i) an ethylene acrylic acid and methacrylic acid copolymer having a melt index between 0.5 and 30 g/10 min;
         (ii) an ionomer of ethylene, methacrylic acid (E/MAA) having a melt index between 0.5 and 30 g/10 min;
         (iii) a maleic anhydride grafted polyethylene or ethylene copolymer having a melt index between 0.5 and 30 g/10 min;
         (iv) a low density polyethylene having a melt index between 0.3 and 30 g/10 min ; or
         (v) a combination of one or more of (i), (ii), (iii) or (iv).

Preferably the aluminum foil is soft and oil-free.

The reflective film of the present invention optionally includes a polymer film as described above, which also has a middle portion consisting of one or more layers of: (i) a low density polyethylene with a melt index between 0.3 and 30 g/10min; (ii) a linear low density polyethylene with a density below 0.930 g/cm³ and melt index between 0.3 and 30 g/10min; (iii) a polyethylene with a density above 0.930 g/cm³ and melt index between 0.3 and 30 g/10min; (iv) an ethylene vinyl acetate copolymer having a vinyl acetate content between 2 and 30% and a melt index between 0.5 and 30 g/10min; (v) a polypropylene; or (vi) any combination of two or more of (i), (ii), (iii), (iv) or (v).

The reflective film of the present invention optionally includes a polymer film composite as described above, which also has a middle portion consisting of one or more layers of kraft paper.

In accordance with another aspect of the present invention, there is provided a composite comprising a reflective film as described above laminated to one side of a construction material, wherein the reflective film is directly adhered to the construction material such that the layer of Aluminium foil forms an outer surface of the composite.

The composite of the present invention optionally comprises a reflective film having a polymer film that includes a first portion and a second portion, as outlined above, together with a middle portion consisting of one or more layers of: (i) a low density polyethylene with a melt index between 0.3 and 30 g/10min; (ii) a linear low density polyethylene with a density below 0.930 g/cm³ and melt index between 0.3 and 30 g/10min; (iii) a polyethylene with a density above 0.930 g/cm³ and melt index between 0.3 and 30 g/10min; (iv) an ethylene vinyl acetate copolymer having a vinyl acetate content between 2 and 30% and a melt index between 0.5 and 30 g/10min; (v) a polypropylene; (vi) any combination of two or more of (i), (ii), (iii), (iv) or (v), wherein the reflective film is directly adhered to the construction material such that the layer of Aluminum foil forms a surface of the composite.

The composite of the present invention optionally comprises a reflective film having a polymer film composite that includes a first portion and a second portion, as outline above, together with a middle portion consisting of one or more layers of kraft paper.

The invention also provides a method of manufacturing a composite material as defined above comprising the step of thermo-laminating the reflective film defined above to one side of a construction material such that the layer of Aluminum foil forms a surface of the composite material.

### BRIEF DESCRIPTION OF THE FIGURES

Figure 1 provides a cross-sectional view of the composite material according to one embodiment of the present invention.
Figure 2 is a graphical depiction of a simulation of wood panel cooling (---◆--- wood panel temperature profile; ---■--- oven temperature profile).
Figure 3 is a graphical representation of the influence of the inter-grip distance on peel strength.
Figure 4 is a graphical representation of the influence of the peeling velocity on peel strength.
Figure 5 is a graphical representation of the influence of formulation and processing temperature and pressure on adhesion strength of a reflective six according to one embodiment of the present invention (- -◆- - film 1, 2.8 bar (40 psi); --■-- film 1, 7.6 bar (110 psi); - -◆- - film 2, 2.8 bar (40 psi); ---■--- film 2, 7.6 bar (110 psi); - -◆- - film 3, 2.8 bar (40 psi); ---■--- film 3, 7.6 bar (110 psi).
Figure 6 is a graphical representation of the influence of formulation and processing temperature on adhesion strength of a perforated reflective film according to one embodiment of the present invention (---■--- film 1, 7.6 bar (110 psi); ---■--- film 2, (7.6 bar (110 psi); ---■--- film 3, 7.6 bar (110 psi).
Figure 7 is a graphical representation of the effect of ageing on a composite according to ne embodiment of the present invention under wet conditions (Film 1, 7,6 bar (110 psi), 75°C; Film 2, 7.6 bar (110 psi), 120°C; Film 3, 5.2 bar (75 psi), 120°C; Kraft paper (bottom symbol at each time)),

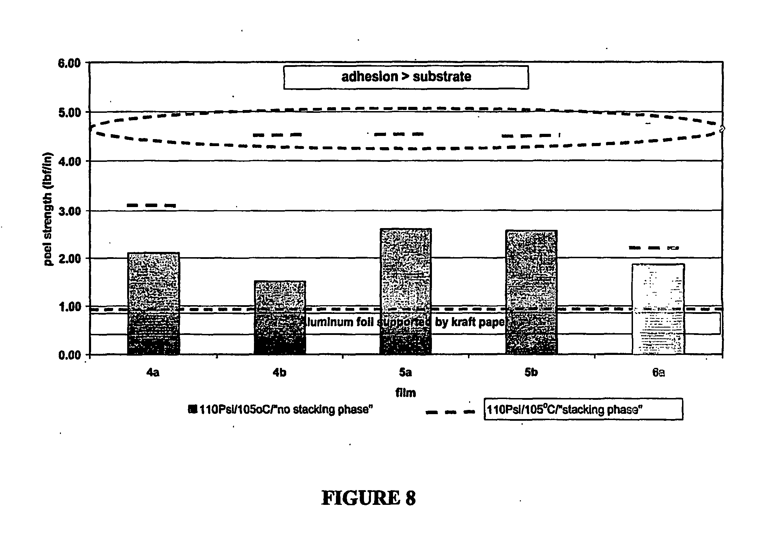

Figure 8 is a graphical representation of the influence of formulation and processing temperature and pressure on adhesion strength of a reflective film according to one embodiment of the present invention.
Figure 9 depicts an example of water distribution system (sprayer) that may be used in one embodiment of the present invention.
Figure 10 depicts an example of water distribution system (water-bath + squeezing roll) that may be used in one embodiment of the present invention.
Figure 11 is a graphical representation of the influence of formulation and processing temperature and pressure on adhesion strength of a reflective film according to one embodiment of the present invention.
Figure 12 is a graphical representation of the influence of water immersion on adhesion strength of a reflective film according to one embodiment of the present invention.
Figure 13 is a graphical representation of the aging conditions used to test long-term adhesion strength of a reflective film according to one embodiment of the present invention.
Figure 14 is a graphical representation of the influence of aging on long-term adhesion strength of a reflective film according to one embodiment of the present invention.

### DETAILED DESCRIPTION OF THE INVENTION

The present invention provides a reflective film as defined above useful for lamination to the surface of a construction material without the use of an adhesive. The present invention further provides a composite as defined above comprising the reflective film, which is laminated to a surface of a construction material.

### Reflective Film Components

The reflective film of the present invention comprises a polymer film formulated to allow the reflective film to be laminated to a surface of a construction material without the use of an adhesive. One surface of the polymer film has a surface energy of at least 350µN (35 dynes) and is uniformly adhered to a layer of converter grade Aluminum foil having a thickness of between about 0.00685µm (0.00025 mil) and about 51µm (2mil).

In describing the components of the reflective film or film composite of the present invention, it is understood that all percentages listed are referring to percentages by weight.

### Polymer film

The reflective film of the present invention comprises a polymer film having a thickness of between 25 and 250µm (1 and 10 mil), or optionally 51 to 102µm (2 to 4 mil), wherein at least one surface of the film has a surface energy of at least 350µN (35 dynes). The polymer film comprises one or more layers of polyethylene, low density polyethylene, a polyethylene copolymer or a combination thereof.

In one embodiment of the present invention, the reflective film comprises a polymer film or film composite that consists of three portions. One outer portion of the polymer film or film composite is formulated for adhesion to a construction material and the other outer portion is formulated for adhesion to the layer of Aluminum foil.

The first outer portion, referred to herein as Portion A, is for adhesion to the construction material and can comprise one or more layers of:
(i) a metallocene-catalyzed polyethylene with density below 0.907 g/cm³ and a melt index between 0.5 and 30 g/10min, such as Dow AFFINITY^{®} PF 1140, which has a melt index of 1.6 g/10min or AFFINITY^{®} PL 1880, which has a melt index of 1.2 g/10mm;
(ii) an ethylene vinyl acetate copolymer (EVA) having a vinyl acetate content between 2 and 30% and a melt index between 0.5 and 30 g/10min, such as AT Plastics ATEVA^{®} 1075, which has a melt index of 7.5 g/10min and a vinyl acetate content of 9%;
(iii) an acid/acrylate or anhydride modified ethylene vinyl acetate copolymer having a melt index between 0.5 and 30 g/10min, such as Dupont BYNEL^{®} 3120, which has a melt index of 9.5 g/10min or BYNEL^{®} 30E671, which has a melt index of 2.1
(iv) an acid or anhydride modified ethylene acrylate copolymer having a melt index between 0.5 and 30 g/10min, such as Dupont BYNEL^{®} 2002, which has a melt index of 10g/10min or BYNEL^{®} 2169, which has a melt index of 6.5 g/10min;
(v) an ethylene butyl-, ethyl- or methyl-acrylate copolymer (EBA, EEA or EMA) having a melt index between 0.5 and 30 g/10min, such as Eastman EMAC^{®} SP2207, which has a melt index of 6 g/10min or Dupont ELVALOY^{®} 1609AC, which has a melt index of 6 g/10min or ELVALOY^{®} 2112AC, which has a melt index of 1.0 g/10min or ELVALOY^{®} 3427AC, which has a melt index of 4.0 g/10min;
(vi) a terpolymer of ethylene, butyl-acrylate and glycidylmethacrylate (E/nBA/GMA) having a melt index between 0.5 and 30 g/10min, such as Dupont ELVALOY^{®} PTW, which has a melt index of 12 g/10min;
(vii) an ethylene acrylic acid and methacrylic acid copolymer having a melt index between 0.5 and 30 g/10min, such as Dupont NUCREL^{®} 3990, which has a melt index of 10 g/10min;
(viii) an ionomer of ethylene, methacrylic acid (E/MAA) having a melt index between 0.5 and 30 g/10min, such as Dupont SURLYN^{®} EC1605 or Dupont SURLYN^{®} BF1660;
(ix) a maleic anhydride grafted polyethylene or ethylene copolymer having a melt index between 0.5 and 30 g/10min; such as Dupont FUSABOND^{®} MB528D, which has a melt index of 6.8 g/10min;
(x) a combination of one or more of (i), (ii), (iii), (iv), (v), (vi), (vii), (viii), or (ix), alone or blended with between 0 and 86% low density polyethylene or linear low density polyethylene having a melt index between 0.3 and 30 g/10min.

Alternatively, Portion A consists of linear low density polyethylene having a melt index between 0.3 and 30 g/10min alone or blended with between 0 and 80% low density polyethylene.

The other outside portion, referred to herein as Portion C, is for adhesion to the layer of Aluminum foil and can comprise one or more layers of:
(i) an ethylene acrylic acid and methacrylic acid copolymer having a melt index between 0.5 and 30 g/10min, such as Dupont NUCREL^{®} 3990, which has a melt index of 10 g/10min or NUCREL^{®} AE, which has a melt index of 11 g/10mi;
(ii) an ionomer of ethylene, methacrylic acid (E/MAA) having a melt index between 0.5 and 30 g/10min, such as Dupont SURLYN^{®} EC1605 or Dupont SURLYN^{®} BF1660;
(iii) a maleic anhydride grafted polyethylene or ethylene copolymer having a melt index between 0.5 and 30 g/10min, such as Dupont FUSABOND^{®} MB528D, which has a melt index of 6.8 g/10min;
(iv) a low density polyethylene having a melt between 0.3 and 30 g/10min, such as Eastman TENITE^{®} E6838-969F, which has a melt index of 0.7 g/10min or Voridian Polyethylene 80SP, which has a melt index of 7 g/10min;
(v) a combination thereof.

In a related embodiment of the present invention the reflective film comprises a polymer film that consists of three portions. The outer portions are as described above and are formulated for adhesion to a construction material and for adhesion to the layer of Aluminum foil, respectively. The reflective film that consists of three portions additionally includes a middle portion, referred to as Portion B, which can comprise one or more layers of:
(i) a low density polyethylene with a melt index between 0.3 and 30 g/10min, such as Eastman Tenite^{®} E6838-969F, which has a melt index of 0.7 g/10min or Voridian Polyethylene 808P, which has a melt index of 7 g/10min;
(ii) a linear low density polyethylene of any C4 to C8 alpha olefin as co-monomer in any proportion with a density below 0.930 g/cm³, for example a density of 0.917 g/ cm³ to 0.927 g/ cm³, and melt index of 0.3 to 30 g/10min, such as Nova Chemical AST FP-026F, which has a density of 0.926 g/cm³ and a melt index of 1 g/10min;
(iii) a medium or high density polyethylene having a density above 0.930 g/cm³ and melt index between 0.3 to 30 g/10min, such as Eastman Tenite^{®} M2004P or Atofina M3410EP;
(iv) an ethylene vinyl acetate (EVA) copolymer having a vinyl acetate content between 2 and 30 % and a melt index between 0.5 and 30 g/10min
(v) a polypropylene, such as Basell PRO-FAX^{®} PDC1208 homopolymer, which has a melt flow rate of 6 g/10min, or Basell PRO-FAX^{®} SA861 random copolymer, which has a melt flow rate of 6 g/10min, or Atofina PP 4810 impact copolymer, which has a melt flow rate of 0.7 g/10min; or
(vi) any combination thereof.

In alternative embodiment of the present invention, there is provided a reflective film composite that comprises Portions A and C and a middle Portion B that consists of kraft paper.

The ability of the polymer film or film composite to adhere to the construction materials can be enhanced by decreasing the degree of orientation of the polymer film. It has surprisingly been found that oriented films shrink when heat is applied and do not adhere to the construction material as effectively as the unoriented or less oriented film, which do not shrink with the application of heat. It is therefore important to have as low an orientation as possible when strong adhesion is required. In this respect, cast or extrusion coating films are superior to blown films for applications in which a strong adhesion is required. Cast or extrusion coating films are only oriented in the machine direction whereas blown films are oriented in both the machine and transverse directions.

Orientation refers to the relative orientation of the polymer molecules within the film. A film that is highly oriented exhibits higher crystallinity than a film that is less highly oriented By way of example, a cast film will exhibit orientation of the polymer molecules in one direction (i.e. the machine direction), while a blown film will contain polymer molecules that are oriented in both the machine and transverse directions and will therefore be less highly oriented than the cast film. Thus, there is an inverse relationship between the degree of orientation and the ability of the polymer film or film composite to adhere to construction materials.

One or more layers of the polymer film may contain additional components depending on the ultimate application of the film or the composite of which it is a part. For example, in one embodiment of the present invention, a middle layer of the polymer film is formulated to provide heat resistance. This may be achieved, for example, by including additional resins in the composition used to prepare the middle layer. Suitable resins include high density polyethylene or polypropylene. In this respect, polypropylene will provide superior heat resistance to polyethylene, since polypropylene has a melting temperature between approximately 160°C and 170°C whereas high density polyethylene has a melting temperatures between approximately 120°C and 135°C and low density has a melting point between approximately 100°C and 110°C. Additional additives that may be incorporated in the polymer film or film composite include, but are not limited to, slips agents such as eurucamide, oleamide or stearamide, calcium carbonate or other inorganic fillers, inorganic or organic pigments, mica, diatomaceous earth, or other anti-block agents.

Both of the outer surfaces of the polymer film or film composite are treated to obtain a surface energy of at least 350µN (35 dynes) to enhance adherence of the film or film composite to the construction material and Aluminum foil layer. In order to obtain a surface energy of at least 350µN (35 dynes), the film may be treated using standard techniques well known to a worker skilled in the art. For example, the film may be corona, ozone or flame treated according to standard techniques in order to obtain high surface tension. In an alternative embodiment of the present invention, the Aluminum foil is coated with a primer at an on-line pre-treatment station, wherein the primer facilitates adherence of one of the outer surfaces of the polymer film or film composite to the foil. Alternatively, the Aluminium foil may be treated using a flame or electric discharge (i.e. Corona treater) to increase the surface tension and eliminate residual oils from the surface of the foil. Suitable primers are well known to workers skilled in the art. In this embodiment, the other outer surface is treated using standard techniques, as described above.

### Aluminium Foil

The reflective film of the present invention comprises a layer of Aluminum foil adhered to one surface of the polymer film. The Aluminum foil consists of converter grade Aluminum foil, which is defined as any Aluminum capable of being converted to a multi-layer sheet by lamination with a supporting material. In the present invention, the supporting material is the polymer film or film composite. In one embodiment the Aluminum foil useful in the manufacture of the reflective film of the present invention has the following characteristics:
■ Thickness: 0.00635 µm to 51 µm (0.00025 mil to 2 mil), ±10%
■ Chemical composition:
   ■ Al content: 99.00 % minimum
   ■ Iron silicon content: 1.00 maximum
   ■ Copper content: 0.05 maximum
   ■ Manganese content: 0.05 maximum
   ■ Zinc content: 0.10 maximum
   ■ Titanium content: 0.03 maximum
   ■ Oil free (preferable)
■ Mechanical property limits and typical properties:
   ■ 965 bar (14,000 Psi) O-temper maximum tensile strength, form AA (Aluminum Association Standards and Data) and CEN (European Committee for Standardization)
   ■ 0.64 bar (9.300 Psi) typical tensile O-temper strength
   ■ 4.2% typical elongation O-temper strength

Alloy 1145 from Alcan Aluminum Corporation is one example of an aluminum foil that can be used in accordance with the present invention, although suitable alternatives are also available from companies such as Pechiney and Alcoa.

### Manufacture of the Reflective Film

The polymer film component of the reflective film of the present invention can be produced using a blown film or a cast film extrusion line or using an extrusion coating line. The compositions comprising the ingredients outlined above in relation to the three portions of the polymer film or film composite may be fabricated into mono-layer or multi-layer films by any technique known in the art. For example, mono-layer, or multi-layer films may be produced by the well known cast film, blown film and extrusion coating techniques, the latter including extrusion onto a substrate such as kraft paper or Aluminum foil. The ordinary artisan, in possession of the present disclosure, can prepare such multi-layer films without undue experimentation.

The multi-layer films of the present invention may be prepared by any method known in the art. For example, the multi-layer structures of this invention are readily prepared by conventional coextrusion processes, a conventional on-line or off-line lamination process or a conventional extrusion coating process, all well known in the art. In general, in a coextrusion process, the polymers are brought to the molten state and coextruded, the melt streams being combined in a coextrusion feed block or multi-manifold die prior to exiting the die. After leaving the flat sheet die or annular die, the multi-layer film structure is quenched and removed for subsequent handling.

In a specific embodiment, the one or more portions of the polymer film or film composite comprises one or more layers, which are coextruded using any coextrusion process known in the art. The use of coextrusion allows for the relatively simple and easy manufacture of a multi-layered polymer film composed of distinct layers. Each of the distinct layers of the film may perform a specific function as required by the ultimate application of the reflective film. Although one embodiment of the present invention includes coextrusion of the polymer film, it is noted that the polymer film can be mono-layered, bilayered or multi-layered and that, regardless of form, it can be produced using any other suitable method, if desired, as would be well understood by a worker skilled in the relevant art

If the film is produced using blown film techniques the blow up ratio is preferably less than 2.5 in order to minimise orientation. Typical blown film extrusion lines have been employed, using standard equipment and techniques known to workers skilled in the art, to manufacture all, or a portion of, the polymer film of the present invention.

In one embodiment of the present invention all, or a portion of, the polymer film is formed as a tube. The tube may be collapsed and the sides of the tube allowed to bind to one another, thereby producing a polymer film having twice as many layers as the film in the tube form. For example, a three layer film having a thickness of 38µm (1.5 mil) that is produced in the form of a tube by blown film coextrusion may be collapsed to form a polymer film having six layers and a thickness of 76µm (3 mil). In practice the tube is collapsed through the use of a very tight nip roll at the top of the bubble in a blown film extrusion process. The use of the very tight nip roll at the top of the bubble forceps the sides of the bubble to fuse to each other. In this embodiment, the surfaces of the film may be corona treated immediately after the bubble is collapsed such that the resultant polymer film has both outer surfaces corona treated. This technique is particularly useful in situations where the outer layers of the polymer film need to have the same composition. In addition, the process results in a multi-layered film in which the presence of wrinkles is minimised or eliminated.

In an alternative embodiment the tube is not fused. Instead the tube is slit on both sides thereby creating 2 sheets of all, or a portion of, the polymer film or film composite.

If the film comprising all three portions is produced using cast film techniques, a two layer film is first produced consisting of Portions A and B and Portion C is then extrusion coated in between the Aluminum foil and the cast film to achieve the desired composite structure. Alternatively, a monolayer film consisting of Portion B may be produced using cast film technology followed by a first extrusion coating of Portion A and a second extrusion coating of Portion C to laminate the foil to the resulting two layer film.

In the embodiment in which the reflective film of the present invention comprises a polymer film composite have a middle layer consisting of kraft paper the film composite is manufactured by a first extrusion coating of Portion A onto the Kraft paper and subsequently a second extrusion coating of Portion C onto the opposite surface of the Kraft paper. Alternatively, Portion C is extrusion coated first, followed by extrusion coating of Portion A.

If the film is produced using exclusively extrusion coating techniques, a three layer film, consisting in Portions A, B and C, is directly extruded onto the Aluminum foil, Portion C being in contact with the Aluminum substrate. Alternatively, the extruded polymer film may be mono-layer, two-layer or multi-layer film. In this specific embodiment, it is noted that this manufacturing process is particularly convenient as it allows production of the film in only one-step. Special processing attention and modification from conventional extrusion coating technology is described in Example 3.

Once the polymer film or film composite has been formed using blown or cast film technology, it is adhered to the Aluminum foil to generate the reflective film of the present invention. The Aluminum foil layer may be adhered to the polymeric layer using various techniques that would be known to a worker skilled in the art. For example, the layer of Aluminum foil can be adhered to the polymer film via extrusion laminating of the film to the foil using an extrusion coating machine. Alternatively, the layer of Aluminum foil is adhered to the polymer film using a heat and pressure laminator and a method comprising annealing, heating and pressing the film onto the foil and subsequently cooling the resultant reflective film. In another alternative method, the layer of Aluminum foil is adhered to the polymer film using a solvent or solvent-free lamination system using an adhesive. This adhesive may be based on acrylate, epoxy or polyurethane systems. In another alternative method, the layer of Aluminum foil is adhered to the polymer film using a thermal, an UV (ultra-violet), an E-Beam (electron-beam) curable adhesive and an epoxy-based or polyurethane adhesive. As would be readily appreciated by the skilled worker, this is a non-limiting list of techniques that may be used to adhere the Aluminum foil to the polymer film. In yet another alternative method, the Aluminum foil is sprayed with a thin layer of a primer, such as those available from Mica Corporation, and cured (for example, by passing through a flame oven or by corona treatment) before the cast film is extrusion laminated to a cast film, for example, using LDPE or a mixture of resins as outlined herein.

The object of the present invention is met by either improving the adhesion properties of the polymer film or improving the adhesion properties of the Aluminum foil. The adhesion properties of the polymer film are improved, in comparison to films employed in previously known reflective films and composites, as outline herein by the use of resins such as Nucrel^{®} as a blend agent in the resin composition used to form Portion C of the polymer film. The blend agents act to chemically modify the other components of the resin composition and thereby improve the adhesion properties of the resultant film so that it adheres well to the Aluminum foil layer.

Alternatively or in combination, the adhesion properties of the Aluminum foil are improved by spraying a light primer coating onto one surface of the Aluminum foil, which is then cured. The use of the primer improves the adhesion properties of the Aluminum foil so that it will adhere well to the polymer film, even when Portion C is made up of LDPE alone.

It is understood that any method that results in a uniform adhesion of the Aluminum foil to a surface of the polymer film is considered to be within the scope of the present invention.

In certain applications it may be desirable to introduce a plurality of perforations through the layer of Aluminum foil. The provision of perforations is particularly important in situations where it is necessary to eliminate problems associated with trapped moisture in structural materials made of wood, which moisture can lead to rapid degradation or decay or the materials. The perforations permit the materials to "breathe". For example, when the reflective film is laminated to structural construction material such as plywood or oriented strand board, it is applied to only one major surface of the plywood, which in use, will be the inwardly facing surface, to allow free moisture to escape. This free moisture is largely due to accumulation of moisture in the plywood attributable to rain prior to the "drying in" stage of construction.

Non-perforated reflective film is useful, for example, to enclose bats of insulation such as fiberglass or polyisocyanurate sheathing (insulative sheating), or the like, which is then used to surround ductwork in air conditioning or the like. In that context, the non-perforated material comprises a barrier to moisture, preventing the moisture from entering the enclosed insulation batting.

### Application of the Reflective Film

In accordance with another aspect of the present invention, there is provided a composite material that comprises a construction material having the reflective film adhered to a surface thereof. In accordance with one embodiment of the present invention, the composite material is formed by thermo-laminating the reflective film to the construction material, for example, using a combination of heat and pressure.

The composite material is useful as radiant heat insulation in industrial, commercial and residential buildings. The Aluminum foil layer is highly reflective and marginally emissive. Specifically, it reflects the infra-red beams striking its surface and re-radiates only a very small portion of that energy, effectively serving to retain heat in desired areas. The non-perforated reflective film is waterproof and, therefore, may provide the additional advantage of providing protection from water.

The construction material used in the manufacture of the composite of the present invention may be a structural material, such as, but not limited to, oriented strand board (OSB), lumber based products (e.g. plywood), fibreboard or structural types of plastic sheet, or non-structural material, such as, but not limited to, Styrofoam, insulation material or non-structural types of plastic sheet such as monolithic, twin walled or triple walled polycarbonate sheet or polyisocyanurate insulative sheating.

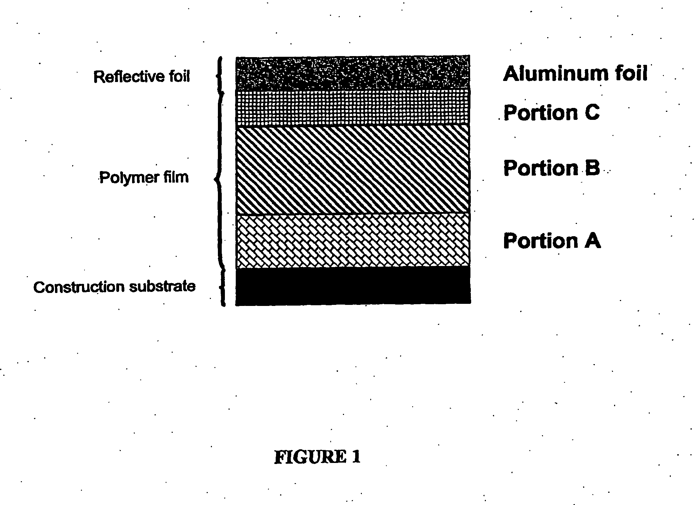

In one example of a structural composite of the present invention the reflective film is laminated to one surface of the construction material (e.g. roof decking) as depicted in Figure 1. Provision of the Aluminum foil on one side of the decking is effective to reflect heat back in the direction from which it comes. Thus, in the summertime, the foil reflects heat back toward the sky and in the winter the foil reflects heat back in the direction of the house. Normally, the decking in accordance with the invention would be applied with the foil layer facing inwardly toward the attic of the house. The low emissive, highly reflective foil must face at least one adjacent air space (the attic) to block radiated heat transfer.

In the case of insulative foam, the reflective film is adhered to one or both, sides of the sheathing.

To gain a better understanding of the invention described herein, the following examples are set forth. It should be understood that these examples are for illustrative purposes only. Therefore, they should not limit the scope of this invention in any way.

### EXAMPLES

### EXAMPLE 1: Three-step process

This Example provides a description of the manufacture of three films according to the present invention using a three-step manufacturing process.

### Film 1:

1. A Cast film of Eastman LDPE Tenite^{®} E6838-808P (Melt Index (MI) = 7 g/10min, Density = 0.917g/cm³) was prepared and treated to 400µN (40 dynes) on one side. The thickness of the film was 51µm (2 mil).
2. The LDPE film was laminated to Aluminum foil (Alcan 1145-0 having a thickness of 0.32 mil) by extrusion coating of Dupont Nucrel^{®} 3990 (MI=10.0 g/10 min, density = 0.940 g/cm³), which is an ethylene acrylic acid copolymer. The thickness of the Nucrel^{®} 3990 was 11µm (0.43 mil). Nucrel^{®} 3990 was coated on the treated side of the LDPE film.
3. The resulting LDPE-Nucrel-A1 film "2" was then treated to 400µN (40 dynes) on the side opposite to the Aluminum layer. A 2-layer film was then extrusion coated on the treated side. The 2-layer film consisted of :
   a. 3.8µm (0.15 mil) of AT Plastics Ateva^{®} 1615 (MI =15.0 g/10min, density = 0.937 g/ cm³, 16% VA) and;
   b. 15µm (0.6 mil) of Dupont Bynel^{®} 3120 (MI = 9.5 g/10min, density = 0.948 g/ cm³), which is an acid/acrylate modified vinyl acetate copolymer.
4. The resulting film "3" was then treated to 400µN (40 dynes) on the outside, opposite the Aluminum layer. The thickness of the composite is 89µm (3.5 mil).
5. The film "4" was subsequently adhered to OSB by thermal lamination with pressure application.

### Film 2:

1. A cast films of Eastman MDPE Tenite^{©} M2004-P (MI = 10.5 g/10min, Density = 0.942g/ cm³) was prepared and treated to 400µN (40 dynes) on one side. The thickness of the film was 51µm (2 mil).
2. Film "1" was laminated to A1 foil by extrusion coating of Dupont Nucrel^{®} 3990 (MI =10.0 g/10min, density = 0.940 g/ cm³), which is an ethylene acrylic acid copolymer of PE. The thickness of the Nucrel^{®} 3990 was 11µm (0.43 mil). Nucrel^{®} 3990 was coated on the treated side of film "1 ".
3. Film "2" was then treated to 400µN (40 dynes) on the other side opposite to the Aluminum layer and a 2-layer film was extrusion coated on the treated side. The 2-layer film consisted of the following ingredients:
   a. 3.8µm (0.15 mil) of AT Plastics Ateva^{®} 1615 (MI =15.0 g/10min, density = 0.937 g/ cm³, 16% VA) and;
   b. 15µm (0.6 mil) of Dupont Bynel^{®} 3120 (MI = 9.5 g/10min, density = 0.948 g/ cm³), which is an acid/acrylate modified vinyl acetate copolymer.
4. Film "3" was then treated to 400µN (40 dynes) on the outside. The thickness of the composite is 89µm (3.5 mil)
5. Film "4" was subsequently adhered to OSB by thermal lamination with pressure application.

### Film 3:

1. A Cast film of Eastman Tenite^{®} E6838-80SP was prepared and treated to 400µN (40 dynes) on one side. The thickness of the film was 51µm (2 mil).
2. Film "2" was laminated to A1 foil by extrusion coating of Dupont Nucrel^{®} 3990 (MI= 10.0 g/10min, density = 0.940 g/ cm³). The thickness of the Nucrel^{®} 3990 was 11µm (0.43 mil). Nucrel^{®} 3990 was coated on the treated side of film "2".
3. Film "3" was then treated to 400 µN (40 dynes) on the side opposite to the Aluminum layer. A 2-layer film was extrusion coated on the treated side. The 2-layer film contained the following ingredients: '
   a. 38 µm (0.15 mil) of AT Plastics Ateva^{®} 1615 (MI = 15.0 g/10min, density = 0.937 g/ cm³, 16% VA) and;
   b. 15 µm (0.6 mil) of AT Plastics Ateva^{®} 1010A (MI =10.5 g/10min, density = 0.942 g/ cm³, 9% VA).
4. Film "4" was then treated to 400 µN (40 dynes) on the outside. The thickness of the composite is 89 µm (3.5 mil).
5. Film "5" was subsequently adhered to OSB by thermal lamination with pressure application.

Thus, reflective films consisting of laminated composites of Aluminum foil supported with polymeric films were prepared having the following three formulations:

**Table 1: Film description - Example 1**

| **Component** | **Film 1** | **Film 2** | **Film 3** |
|---|---|---|---|
| Aluminum foil | Aluminum | Aluminum | Aluminum |
| | (8µm (0.32 mil)) | (8µm (0.32 mil)) | (8µm (0.32 mil)) |
| Portion C | Nucrel 3990 | Nucrel 3990 | Nucrel 3990 |
| | (11 µm (0.43 mil)) | (11µm (0.43 mil)) | (11µm (0.43 mil)) |
| Portion B | LDPE | mMDPE | LDPE |
| | (51 µm (2.0 mil)) | (51 µm (2.0 mil)) | (51 µm (2.0 mil)) |
| | ATEVA 1615 | ATEVA 1615 | ATEVA 1615 |
| | (3.8 µm (0.15 mil)) | (3.8 µm (0.15 mil)) | (3.8 µm (0.15 mil)) |
| Portion A | Bynel 3120 | Bynel 3120 | ATEVA 1010 |
| | (7.6 µm (0.30 mil) | (7.6 µm (0.30 mil) | (7.6 µm (0.30 mil)) |
| | Bynel 3120 | Bynel 3120 | ATEVA 1010 |
| | (7.6 µm (0.30 mil)) | (7.6 µm (0.30 mil) | (7.6 µm (0.30 mil)) |

### Lamination on OSB panels:

A sample of each of the three reflective films was laminated onto an OSB panel. The OSB panels were preheated in an air convection oven up to the point that its surface temperature has reached 132°C (270°F). A slightly higher oven temperature set point of approximately 150°C was required to achieve this panel preheating temperature. This preheating stage simulated panel temperature just after its manufacturing.

The reflective films were then sandwiched between the hot OSB panels and a metallic plaque. After a 5 second preheating stage inside a press at a defined temperature, compression at fixed pressure was applied for a certain processing time (5 seconds in most cases). Following the compression stage the reflective films were fully bound to the OSB panels. In each case, the reflective film on half of the panel was perforated to allow adhesion testing of both virgin and perforated parts following the post-curing stage.

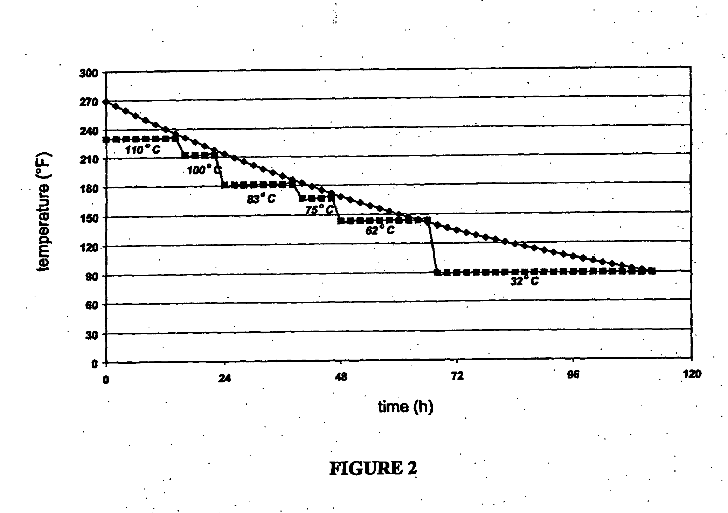

Post-curing stage (or stacking stage) was performed in an oven to simulate the stacking of hot OSB panels during storage. The simulated temperature profile is depicted in Figure 2, which is based on the assumption that the stacked panels during storage reach an ambient temperature of 32°C (90°F) after 4 days.

Various processing temperatures were tested. The selection of the temperatures tested was based on the softening and melting points of the plastic layer in contact with the OSB panel. For example, the softening temperature and melting point of Bynel^{®} 3120 (in films 1 and 2) are 57°C and 87°C, respectively, and the softening temperature and melting point of ATEVA^{®} 1010A (in film 3) are 82°C and 102°C, respectively. Therefore, for films 1 and 2, the processing temperatures tested were 75, 90, 120 and 160°C. The processing temperatures tested for film 3 started slightly higher and were 90, 105, 120 and 160°C. In addition, two processing pressure levels were also investigated.

With the exception of the intermediate pressure and temperature levels, additional experimental points were performed to study other aspects of the process, such as the effect of post-curing treatment in an oven for simulating actual storage, of the use of a cold panel directly without preheating, of the use of a panel having a scratched wood surface, etc. The processing conditions studied are summarised in Table 2.

**Table 2: Lamination processing conditions**

| **Panel #** | **Film** | **Temperature (°C)** | **Pressure (bar (Psi))** | **Compression time (s)** |
|---|---|---|---|---|
| 1 | 1 | 75 | 2.8 (40) | 5 |
| 2 | 1 | 75 | 7.6 (110) | 5 |
| 3 | 2 | 75 | 2.8 (40) | 5 |
| 4 | 2 | 75 | 7.6 (110) | 5 |
| 5 | 3 | 90 | 2.8 (40) | 5 |
| 6 | 3 | 90 | 7.6 (110) | 5 |
| 7 | 1 | 90 | 2.8 (40) | 5 |
| 8 | 1 | 90 | 7.6 (110) | 5 |
| 9 | 2 | 90 | 2.8 (40) | 5 |
| 10 | 2 | 90 | 7.6 (110) | 5 |
| 11 | 3 | 105 | 2.8 (40) | 5 |
| 12 | 3 | 105 | 7.6 (110) | 5 |
| 13 | 1 | 120 | 2.8 (40) | 5 |
| 14 | 1 | 120 | 7.6 (110) | 5 |
| 15 | 2 | 120 | 2.8 (40) | 5 |
| 16 | 2 | 120 | 7.6 (110) | 5 |
| 17 | 3 | 120 | 2.8 (40) | 5 |
| 18 | 3 | 120 | 7.6 (110) | 5 |
| 19B* | 1 | 160 | 2.8 (40) | 5 |
| 19 | 1 | 160 | 2.8 (40) | 5 |
| 20 | 1 | 160 | 7.6 (110) | 5 |
| 21 | 2 | 160 | 2.8 (40) | 5 |
| 22 | 2 | 160 | 7.6 (110) | 5 |
| 23 | 3 | 160 | 2.8 (40) | 5 |
| 24 | 3 | 160 | 7.6 (110) | 5 |
| 25 | 1 | 120 | 5.2 (75) | 5 |
| 26 | 2 | 120 | 5.2 (75) | 5 |
| 27 | 3 | 120 | 5.2 (75) | 5 |
| 28 | 1 | 120 | 2.8 (40) | 5 |
| 29 | 1 | 90 | 7.6 (110) | 20 |
| 30 | 1 | 105 | 7.6 (110) | 5 |
| 31* | 1 | 105 | 7.6 (110) | 5 |
| 32** | 1 | 105 | 7.6 (110) | 20 |
| 33* | 3 | 90 | 1.4 (20) | 3 |
| 34* | 3 | 90 | 1.4 (20) | 6 |
| 35* | 3 | 90 | 7.6 (110) | 6 |
| 36* | 3 | 160 | 1.4 (20) | 6 |

| | | | | |
|---|---|---|---|---|
| * was not post-cured in the oven. ** was not post-cured in the oven and cold panel was used directly. | | | | |

Panels 33, 34, 35 and 36 were preliminary trials employed to set up the investigated processing window,

### Testing procedure:

A peel test was internally developed inside BALCAN PLASTICS LTD to study the effect of the processing and formulation conditions on the adhesion between the reflective film and the wood panel. The test makes use of the INSTRON^{™} 4411 machine.

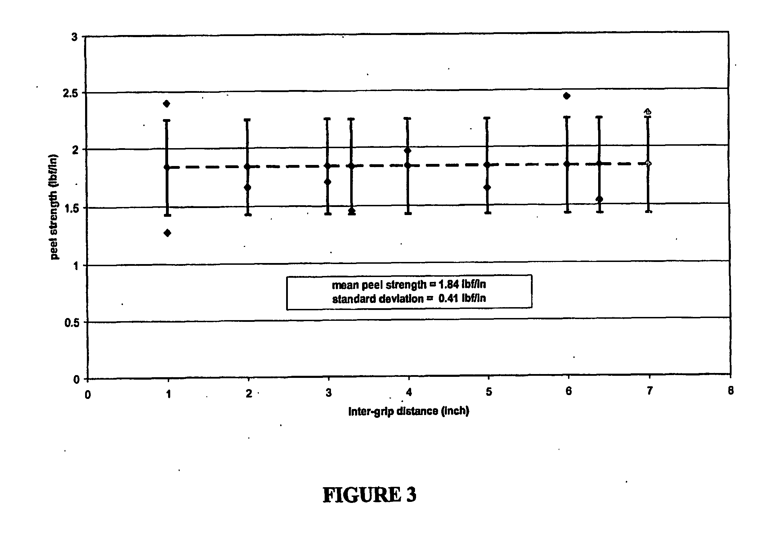

Pre-testing evaluations were performed to develop the peel test methodology. These evaluations demonstrated that inter-grip distance does not appear to affect the measured peel strength (See Figure 3). The variability in the measured peel strength was mainly due to non-homogeneity of the panels resulting from, for example, non-homogeneity of the wood surface roughness, variations in the thickness of the panels and/or the presence or absence of paint. The absolute standard deviation is approximately 23%, however, this relatively high value reflects the non-homogeneity of adhesion on such wood OSB panels.

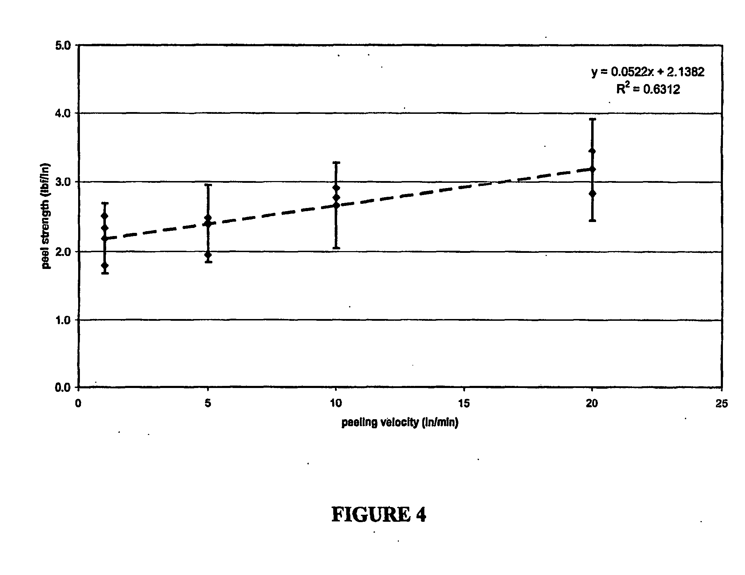

In contrast to the effect of inter-grip distance, it was found that grip speed does have a relatively significant effect on peel strength, as shown in Figure 4. As a result, a peeling speed of 13cm (5 inches) per minute appears to be a relatively good operating velocity for such a testing.

As a result of the pre-testing evaluations, the following conditions were selected for performing the peel test of the panels identified in Table 2:
- 15 cm × 10 cm (6ⁿ × 4ⁿ) sample
- a minimum of 3 tested strips
- peeling speed of 13 cm/minute (5 inch/minute)
- inter-grip distance of 2.5 cm (1 inch)

### Testing results:

In each case the panels were tested in the virgin (i.e. non-perforated) region. The peel strength results are summarised in Table 3, in which "adhesion > substrate" indicates that the adhesion is so strong that the reflective film break rather than peels.

**Table 3: Peel strengths results - Example 1**

| **Panel #** | **Film** | **Temperature (°C)** | **Pressure (bar Psi))** | **Compression time (s)** | **Peel Strength (N/cm (lbf/in))** |
|---|---|---|---|---|---|
| 1 | 1 | 75 | 2.8 (40) | 5 | adhesion > substrate |
| 2 | 1 | 75 | 7.6 (110) | 5 | adhesion > substrate |
| 7 | 1 | 90 | 2.8 (40) | 5 | 7.89 (4.47) |
| 8 | 1 | 90 | 7.6 (110) | 5 | 10.18 (5.77) |
| 13 | 1 | 120 | 2.8 (40) | 5 | 5.70 (3.23) |
| 14 | 1 | 120 | 7.6 (110) | 5 | 7.52 (4.26) |
| 19B* | 1 | 160 | 2.8 (40) | 5 | adhesion > substrate |
| 19 | 1 | 160 | 2.8 (40) | 5 | adhesion > substrate |
| 20 | 1 | 160 | 7.6 (110) | 5 | adhesion > substrate |
| 25 | 1 | 120 | 5.2 (75) | 5 | adhesion > substrate |
| 28 | 1 | 120 | 2.8 (40) | 5 | adhesion > substrate |
| 29 | 1 | 90 | 7.6 (110) | 20 | adhesion > substrate |
| 30 | 1 | 105 | 7.6 (110) | 5 | adhesion > substrate |
| 31* | 1 | 105 | 7.6 (110) | 5 | 4.04 (2.29) |
| 32** | 1 | 105 | 7.6 (110) | 20 | 5.22 (2.96) |
| 3 | 2 | 75 | 2.8 (40) | 5 | 3.39 (1.92) |
| 4 | 2 | 75 | 7.6 (110) | 5 | 4.09 (2.34) |
| 9 | 2 | 90 | 2.8 (40) | 5 | 4.02 (2.28) |
| 10 | 2 | 90 | 7.6 (110) | 5 | 5.26 (2.98) |
| 15 | 2 | 120 | 2.8 (40) | 5 | 6.11 (3.46) |
| 16 | 2 | 120 | 7.6 (110) | 5 | adhesion > substrate |
| 21 | 2 | 160 | 2.8 (40) | 5 | adhesion > substrate |
| 22 | 2 | 160 | 7.6 (110) | 5 | adhesion > substrate |
| 26 | 2 | 120 | 5.2 (75) | 5 | 4.66 (2.64) |
| 5 | 3 | 90 | 2.8 (40) | 5 | 5.14 (2.91) |
| 6 | 3 | 90 | 7.6 (110) | 5 | 3.92 (2.22) |
| 11 | 3 | 105 | 2.8 (40) | 5 | 3.92 (2.22) |
| 12 | 3 | 105 | 7.6 (110) | 5 | 4.08 (2.31) |
| 17 | 3 | 120 | 2.8 (40) | 5 | 3.65 (2.07) |
| 18 | 3 | 120 | 7.6 (110) | 5 | 3.89 (2.20) |
| 23 | 3 | 160 | 2.8 (40) | 5 | adhesion > substrate |
| 24 | 3 | 160 | 7.6 (110) | 5 | adhesion > substrate |
| 27 | 3 | 120 | 5.2 (75) | 5 | adhesion > substrate |
| 33* | 3 | 90 | 1.4 (20) | 3 | 0.48 (0.27) |
| 34* | 3 | 90 | 1.4 (20) | 6 | 0.62 (0.35) |
| 35* | 3 | 90 | 7.6 (110) | 6 | 3.53 (2) |
| 36* | 3 | 160 | 1.4 (20) | 6 | 4.91 (2.78) |

| | | | | | |
|---|---|---|---|---|---|
| * was not post-cured in the oven. ** was not post-cured in the oven and cold panel was used directly. | | | | | |

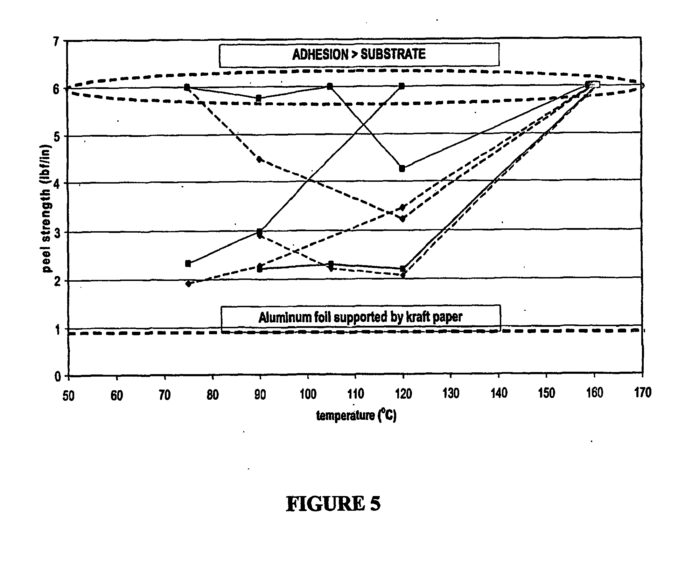

Figure 5 summarises the influence of formulation and processing temperature and pressure on adhesion. An arbitrary value of 10.6 N/cm (6 lbf/in) was assigned for those samples when adhesion was too strong to be measured (i.e. adhesion strength > film rupture).

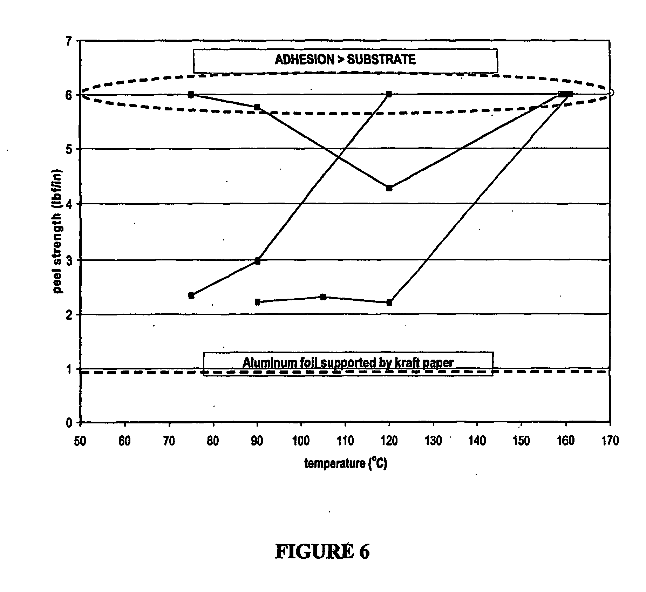

Identical peel tests were performed using the region of the panels that was perforated during the manufacture. Only those panels processed at 7.6 bar (110 Psi) were tested. These studies demonstrated the effect of the perforation on the strength of adhesion to the panels. As depicted in Figure 6, perforation does not appear to affect adhesion strength since identical peel strengths were observed for the non-perforated and perforated regions of the same panels.

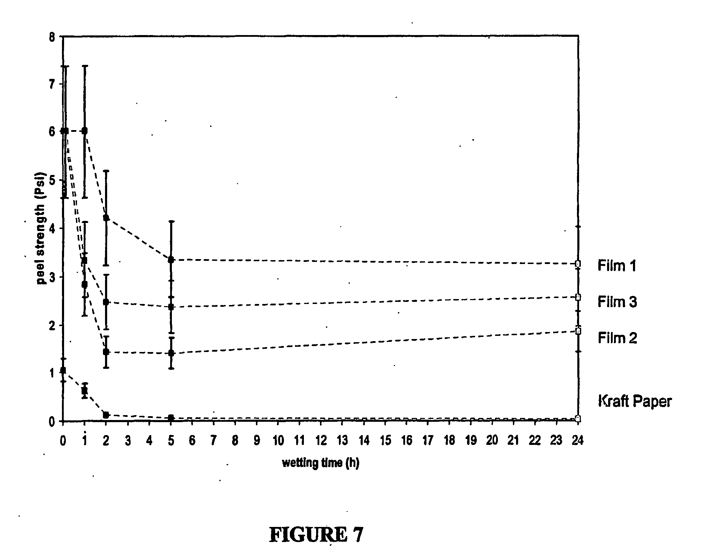

Peel strength was also tested after ageing of panels in water at room temperature (~20°C). These studies were performed using panels 2, 16 and 27, which are those panels that exhibited strong adhesion and were prepared using the least stringent conditions and films 1, 2 and 3, respectively. A panel that was laminated using a reflective film in which the Aluminum foil layer is supported by kraft paper was also tested. The effect of ageing on peel strength is shown in Figure 7. The OSB panel laminated with the reflective films comprising Aluminum foil supported by the polymeric film demonstrated better ageing characteristics (i.e. better adhesion strength) than the OSB panel laminated with the reflective film in which the Aluminum foil layer is supported by kraft paper.

### Conclusions:

As a result of these peeling test studies, the following conclusions were made:
- Adhesion in dry or wet conditions was found to be more effective when using reflective films in which the Aluminum foil was supported by polymeric film alone rather than a kraft paper composite.
- Ageing study shows that immersion in water deteriorates the adhesion of the reflective films on OSB panels. Yet this property decrease is acceptable when using reflective films in which the Aluminum foil was supported by polymeric film whereas it is drastic in reflective films using kraft paper as support.
- Adhesion on OSB panels is strongly dependent upon lamination conditions.
   - Irrespective of the temperature and formulation, the higher the processing pressure the stronger the adhesion.
   - Irrespective of the formulation, the use of a very high processing temperature (e.g. 160°C) resulted in very strong adhesion.
- Wrinkles due to the intrinsic manner of applying the Aluminum foil on the OSB panel are more numerous and pronounced at higher processing temperatures, however, the use of high processing temperatures can dramatically diminish immediate scratch resistance.
- Use of Dupont Bynel^{®} 3120 rather than AT Plastics ATEVA^{®} 1010A as the contact layer with the OSB panel favours better adhesion.
- Combining Dupont Bynel^{®} 3120 with an LDPE middle portion achieved better adhesion at low temperature than the use of the formulation in which Dupont Bynel^{®} 3120 was combined with a middle portion consisting of mMDPE.
- The post-curing stage provides better adhesion, at least when Dupont Bynel^{®} 3120 is used (compare panel 30 to 31). This enhancement is more pronounced when rather low processing temperatures are used (compare panels 19 and 19B to panels 30 and 31).

### EXAMPLE 2: Two-step process

This Example describes the manufacture of films according to the present invention using a two-step manufacturing process.

### Film 4a and 4b:

1. A two-layer cast film consisting of layer (a) Eastman Tenite^{®} E6838-808P (MI = 7.0 g/10min, density 0.917 g/ cm³) and layer (b) consisting of a blend of 50% of Ateva^{®} 1010A + 50% Nucrel^{®} AE (MI =10.5 g/10min).
   Two different thicknesses were produced where:
   i. Cast part of film 4a is a 66 µm (2.6 mil) film consisting of 51 µm (2 mil) of layer (a) and 15 µm (0.6 mil) of layer (b)
   ii. Cast part of film 4b is a 53 µm (2.1 mil) film consisting of a 38 µm (1.5 mil) of layer (a) and 15 µm (0.6 mil) of layer (b)
2. Layer (a) was then treated to 420 µN (42 dynes) on the outside.
3. A 10 µm (0.4 mil) coating of 100% Nucrel^{®} AE (MI = 11.0 g/10min) was applied onto layer (a) using an extrusion coating machine.
4. The exterior layer (layer (b) consisting of the ATEVA^{®} /Nucrel^{®} blend) was then treated to 420 µN (42 dynes). The thickness of the composite is 84 µm (3.32 mil) for film 4a and 72 µm (2.82 mil) for film 4b.
5. The film "4" was subsequently adhered to OSB by thermal lamination with pressure application.

### Film 5a and 5b:

1. A two-layer cast film consisting of layer (a) Eastman Tenite^{®} E6838-808P (MI = 7.0 g/10min, density 0.917 g/ cm³) and layer (b) consisting of a blend of 75% of Ateva^{®} 1010A + 25% Bynel^{®} 2002 (MI =10.0 g/10min).
   Two different thicknesses were produced where:
   i. Cast part of film 5a is a 66 µm (2.6 mil) film consisting of 51 µm (2 mil) of layer (a) and 15 µm (0.6 mil) of layer (b)
   ii. Cast part of film 5b is a 53 µm (2.1 mil) film consisting of a 38 µm (1.5 mil) of layer (a) and 15 µm (0.6 mil) of layer (b)
2. Layer (a) was then treated to 420 µN (42 dynes) on the outside.
3. A a 10 µm (0.4 mil) coating of 100% Nucrel^{®} AE (MI = 11.0 g/10min) was applied onto layer (a) using an extrusion coating machine.
4. The exterior layer (layer (b) consisting of the ATEVA^{®} /Bynel^{®} blend) was then treated to 420 µN (42 dynes). The thickness of the composite is 84 µm (3.32 mil) for film 5a and a 72 µm (2.82 mil) for film 5b.
5. The film "4" was subsequently adhered to OSB by thermal lamination with pressure application.

### Film 6a:

1. A two-layer cast film consisting of layer (a) Eastman Tenite^{®} E6838-808P (MI = 7.0 g/10min, density 0.917 g/ cm³) and layer (b) consisting of a pure layer of Ateva^{®} 1615 (MI = 1 g/10min). Cast part of film 6a is a 66 µm (2.6 mil) film consisting of 51 µm (2 mil) of layer (a) and 15 µm (0.6 mil) of layer (b)
2. Layer (a) was then treated to 420 µN (42 dynes) on the outside.
3. A 10 µm (0.4 mil) coating of 100% Nucrel^{®} AE (MI = 11.0 g/10min) was applied onto layer (a) using an extrusion coating machine.
4. The exterior layer (layer (b) consisting of the ATEVA^{®}) was then treated to 420 µN to (42 dynes) The thickness of the composite is 84 µm (3.32 mil) (film 6).
5. The film "4" was subsequently adhered to OSB by thermal lamination with pressure application.

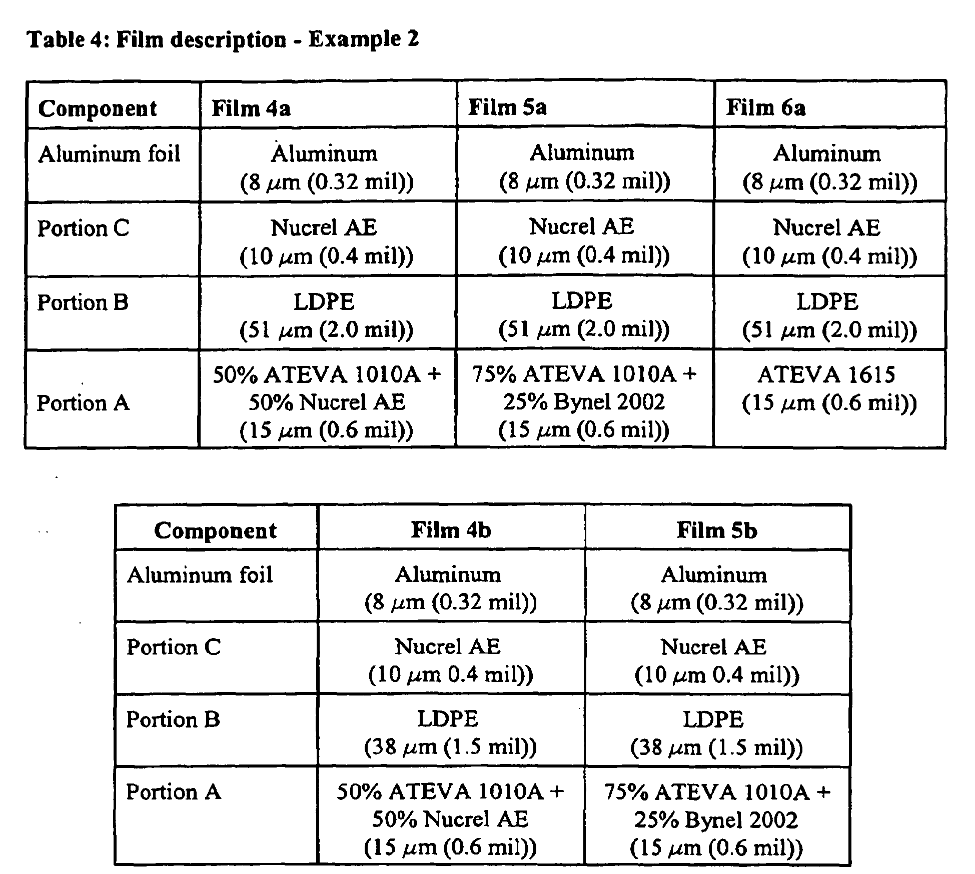

### Results:

Once laminated on OSB panels, peeling test, internally developed inside BALCAN PLASTICS LTD as described in example 1, has been performed on these reflective films. Results varied depending upon lamination conditions as shown in Table 5. Due to reduced thickness of these reflective films, a new arbitrary peeling strength of 7.9 N/cm (4.5 lbf/in) refers to adhesion strength superior to film rupture.

**Table 5: Peel strength results - Example 2**

| Sample | peel strength (N/cm (lbf/in)) | lamination conditions |
|---|---|---|
| 4a | 3.71 (2.10 lbf/in) | (7.6 bar (110Psi)/105°C/"no stacking step") |
| 4b | 2.65 (1.50 lbf/in) | (7.6 bar (110Psi)/105°C/"no stacking step") |
| 5a | 4.59 (2.60 lbf/in) | (7.6 bar (110Psi)/105°C/"no stacking step") |
| 5b | 4.52 (2.56 lbf/in) | (7.6 bar (110Psi)/105°C/"no stacking step") |
| 6a | 3.28 (1.86 lbf/in) | (7.6 bar (110Psi)/105°C/"no stacking step") |
| 4a | 5.29 (3 lbf/in) | (7.6 bar (110Psi)/105°C/"stacking step") |
| 4b | >7.9 (>4.5 lbf/in) | (7.6 bar (110Psi)/105°C/"stacking step") |
| 5a | >7.9 (>4.5 lbf/in) | (7.6 bar (110Psi)/105°C/"stacking step") |
| 5b | >7.9 (>4.5 lbf/in) | (7.6 bar (110Psi)/105°C/"stacking step") |
| 6a | 3.92 (2.22 lbf/in) | (7.6 bar (110Psi)/105°C/"stacking step") |

### Conclusions:

- In comparison with example 1, two-step process allows simplifying the manufacture of reflective films versus three-step process.
- Reduction of thickness up to 72 µm (2.82 mil) was possible without observing significant loss in adhesion strength.
- Use of Bynel^{®} 2002 blended with EVA provides huge improvements in adhesion strength on OSB panels.

### EXAMPLE 3: One-Step Process

The following describes a one-step process for the manufacture of a reflective film according to the present invention. The reflective film is manufactured using an extrusion coating process for laminating the multi-layer polymer film to Aluminum foil in a single step.

When using conventional extrusion coating technology, without water quenching, polymers which are adhesive in nature, such as Surlyn^{®}, Fusabond^{®}, Nucrel^{®}, Bynel^{®}, Elvaloy^{®}, EVAs, EMAs, EEAs, LLDPEs with densities below 0.915 g/cm³, VLDPEs, ULDPEs and the like, have a tendency to stick on the chill roll. This can lead to difficulty in obtaining proper lamination to the Aluminum foil and results in a risk of film tearing during the lamination stage.

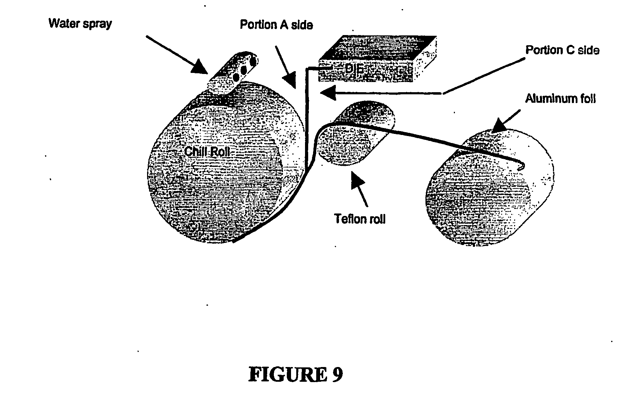

Modification of the line used for manufacture of the reflective film to enable a fine water layer between the chill roll and the molten polymer (see Figure 9) allows the film to release more readily, since its contact with the chill roll is reduced. This in turn results in improved lamination and reduces the risk of film tearing during the lamination stage. A series of driers are then used to dry the remaining moisture off the film and minimise or eliminate water entrapment problems, such as poor adhesion to the substrate (e.g. an OSB panel) and deterioration of film appearance (e.g. surface oxidation of Aluminium foil).

Peel strengths of the film laminates produced using the above process were evaluated using the test method described in Example 1, in the section "Testing procedure". The peeling test requires the use of INSTRON^{®} 4411 tensile machine. The main conditions of this internal procedure were:
- 15cm x 10cm (6" x 4") sample
- a minimum of 3 tested strips of 2.5cm (1 inch) width
- peeling speed of 13cm/minute (5 inch/minute)
- inter-grip distance of 2.5cm (1 inch)

The results of these tests demonstrated that there was no reduction of peel strength when the reflective film was produced using the one-step process rather than multiple-step process (i.e. use of blown film or cast film extrusion followed by one or two extrusion coating steps)..In each case the films were adhered to an OSB panel using thermal lamination with pressure application.

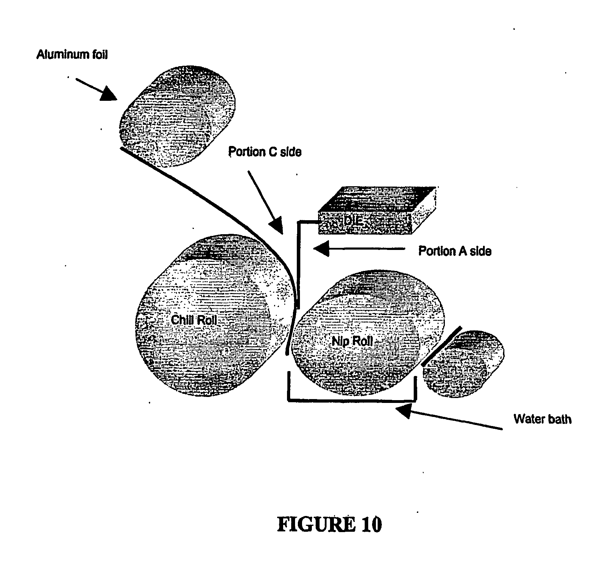

When using the one-step process, it is important that the surface film produced be substantially free of water. It was found that the presence of a significant quantity of water on the film negatively affected the reflective film appearance after a few days. Therefore, when using this one-step process for the manufacture of the reflective film, all or most of the water was eliminate from the surface of the film before winding it into rolls. One example of a method for eliminating the water on the surface of the film makes use of a technique commonly used in the manufacture of embossed mulch films using the cast film process. Specifically, the nip roll is in direct contact with water from a water bath. A squeezing roll is then used to reduce excess amounts of water on this nip roll. The squeezing roll allows control of water droplet size as well as water volume and water distribution on the nip roll. This is a process commonly used in the manufacture of embossed films and can be used here to overcome problems associated with tackiness of adhesive resins such as EVAs, EMAs, EEAs, EBAs, LLDPEs with density below 0.915 g/cm³, VLDPEs, ULDPEs, etc. This modified extrusion coating process is depicted in Figure 10.

Examples of reflective films manufactured using the one-step process are outlined below:

### Film 7a and 7b (72 µm 2.82 mil):

□ 8 µm (0.32 mil) Aluminium Foil
□ Portion C : 10 µm (0.40 mil)- 100% NUCREL^{®} 3990 (MI =10.0 g/10min -9% Acrylic acid)
□ Portion B : 38 µm (1.50 mil)- 100% LDPE 808P (7.0 g/10min - 0.9178 g/cm³)
■ Portion A : 15 µm (0.60 mil)- 75% ATEVA^{®} 1075A + 25% BYNEL^{®} 2002 (MI = 8.0 g/10min)

7a was manufactured without using any water layer between the chill roll and the molten polymer (dry condition) whereas 7b was made using a water layer (wet conditions - see Figure 9).

### Film 7c (72 µm 2.32 mil):

■ 8 µm (0.32 mil)- Aluminium Foil
■ Portion C : 10 µm (0.40 mil)- 100% NUCREL^{®} 3990 (MI =10.0 g/10min -9% Acrylic acid)
■ Portion B : 25 µm (1.00 mil)- 100% LDPE 808P (7.0 g/10mn- 0.9178 g/cm³)
■ Portion A : 15 µm (0.60 mil)- 75% ATEVA^{®} 1075A + 25% BYNEL^{®} 2002 (MI = 8.0 g/10min)

7c was manufactured without using any water layer between the chill roll and the molten polymer (dry conditions).

For comparison, Film 8, based on an identical formulation, was manufactured using a two-step process i.e. the extrusion of cast film consisting of Portion A and B followed by extrusion coating of Portion C in between the cast film and the Aluminum foil to complete the composite structure. The thickness of Film 8 is 72 µm (2.82 mil) as in Films 7a and 7b. None of the external surface of Portion A of these films was corona treated These four films were adhered onto OSB panels using thermal lamination with pressure application.

**Table 6: Film description - Example 3**

| **Component** | **Film 7a and 7b** | **Film 7c** | **Film 8** |
|---|---|---|---|
| Aluminum foil | Aluminum | Aluminum | Aluminum |
| | (8 µm (0.32 mil)) | (8 µm (0.32 mil)) | (8 µm (0.32 mil)) |
| Portion C | Nucrel 3990 | Nucrel 3990 | Nucrel 3990 |
| | (10 µm (0.4 mil)) | (10 µm (0.4 mil)) | (10 µm (0.4 mil)) |
| Portion B | LDPE | LDPE | LDPE |
| | (38 µm (1.5 mil)) | (38 µm (1.5 mil)) | (38 um (1.5 mil)) |
| Portion A | 75% ATEVA 1075 + 25% Bynel 2002 | 75% ATEVA 1075 + 25% Bynel 2002 | 75% ATEVA 1075 + 25% Bynel 2002 |
| | (15 µm (0.6 mil)) | (15 µm (0.6 mil)) | (15 µm (0.6 mil)) |

The peel strengths of reflective films produced using the one-step process were tested. Lamination conditions for this test were (i) 1.4 bar (40 Psi) 105°C/"no stacking step"; and (ii) 7.6 bar (110 psi) 105°C/"stacking step", which was assumed to be a closer approximation of further production conditions. The term "stacking phase", is used herein to refer to post-curing in an oven following the lamination phase onto OSB panels, which stimulates the actual OSB panel temperature decrease immediately after its manufacture (see Figure 1).

### Testing results:

**Table 7: Peel strength results - example 3**

| Sample | Peel strength (N/cm (lbf/in)) | Lamination conditions |
|---|---|---|
| 7a | 2.61 (1.48 lbf/in) | (1.4 bar (40 Psi)/105°C/"no stacking step") |
| 7b | 3.44 (1.95 lbf/in) | (1.4 bar (40 Psi)/105°C/"no stacking step") |
| 7c | 2.35 (1.33 lbf/in) | (1.4 bar (40 Psi)/105°C/"no stacking step") |
| 8 | 3.21 (1.82 lbf/in) | (1.4 bar (40 Psi)/105°C/"no stacking step") |
| 7a | >7.1 (>4 lbf/in) | (7.6 bar (110 Psi)/105°C/"stacking step") |
| 7b | >7.1 (>4 lbf/in) | (7.6 bar (110 Psi)/105°C/"stacking step") |
| 7c | >7.1 (>4 lbf/in) | (7.6 bar (110 Psi)/105°C/"stacking step") |
| 8 | >7.1 (>4 lbf/in) | (7.6 bar (110 Psi)/105°C/"stacking step") |

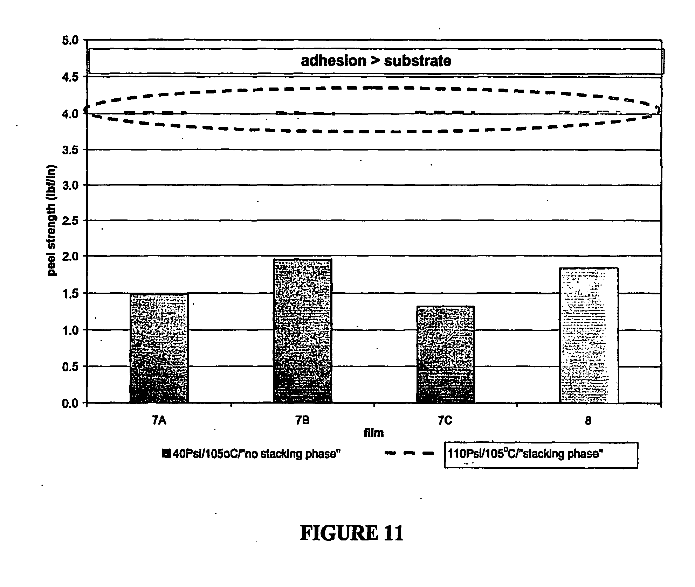

Under 1.4 bar (40 Psi)/105°C/"no stacking" lamination conditons, peel strength values around 2.6-3.5 N/cm (1.5-2 lbf/in) are quite similar to those obtained using multiple-step process at identical composition (see Figure 11). With more favourable lamination conditions (7.6 bar (110 Psi) 105°C/"stacking"), an arbitrary value of greater than 7.1N/cm (4 lbf/in) was assigned, since the adhesion strength was superior to the film rupture. This arbitrary value is slightly below that in Examples 1 and 2 because thicknesses have been reduced from 97µm (3.82 mil) in Example 1 to 59µm (2.32 mil) in Example 3.

In conclusion, use of the one-step process does not alter the adhesion of the reflective film of the present invention on OSB panels. In addition, the one-step process enables manufacturing such reflective films in a simple manner that allows easy down gauging.

As would be readily appreciated by a worker skilled in the art, the one-step process described wherein is not limited to the manufactured of reflective films having the above formulations. Rather, this process can be used for the manufacture of any reflective film according to the present invention.

### EXAMPLE 4: Long-Term Ageing

Films 7a, 7b, 7c and 8 used in this study are as described in Example 3. Films 9 and 10 were manufactured following a two-step process as described below.

### Film 9:

1. A two-layer cast film consisting of layer (a) Equistar NA 21700 (MI = 5.5 g/10min, density 0.923 g/ cm³) and layer (b) consisting of a layer of 75% Ateva^{®} 1075 (MI = 7.5 g/10min) and 25% Bynel^{®} 2002. Cast part of film 9 is a 53µm (2.1 mil) film consisting of 38µm (1.5 mil) of layer (a) and 15µm (0.6 mil) of layer (b)
2. Layer (a) was then treated to 420µN (42 dynes) on the outside.
3. A 10µm (0.4 mil) coating of 100% Nucrel^{®} 3990 (MI =10.0 g/10min) was applied onto layer (a) using an extrusion coating machine.
4. Contrary to film manufacturing in Example 2, the exterior layer (layer (b) consisting of the 75% Ateva^{®} 1075 and 25% Bynel^{®} 2002) was not treated to 420µN (42 dynes) which allows pure formulation comparison with films 7a, b, c and 8. The thickness of the composite is 72 µm (2.82 mil) (film 9).
5. The film "4" was subsequently adhered to OSB by thermal lamination with pressure application.

### Film 10:

1. A two-layer cast film consisting of layer (a) Equistar LDPE NA 21700 (MI = 5.6 g/10min, density 0.923 g/ cm³) and layer (b) consisting of a pure layer of Equistar LDPE NA 21400 (MI =1 10.0 g/10min, density 0.918 g/ cm³). Cast part of film 10 is a 53µm (2.1mil) film consisting of 38µm (1.5 mil) of layer (a) and 15µm (0.6 mil) of layer (b).
2. Layer (a) was then treated to 420µN (42 dynes) on the outside.
3. A 10µm (0.4 mil) coating of 100% Nucrel^{®} 3990 (MI =10.0 g/10min) was applied onto layer (a) using an extrusion coating machine.
4. Contrary to film manufacturing in Example 2, the exterior layer (layer (b) consisting of Equistar LDPE NA 21700) was then treated to 42 dynes.. The thickness of the composite is 72µm (2.82 mil) (film 10).
5. The film "4" was subsequently adhered to OSB by thermal lamination with pressure application.

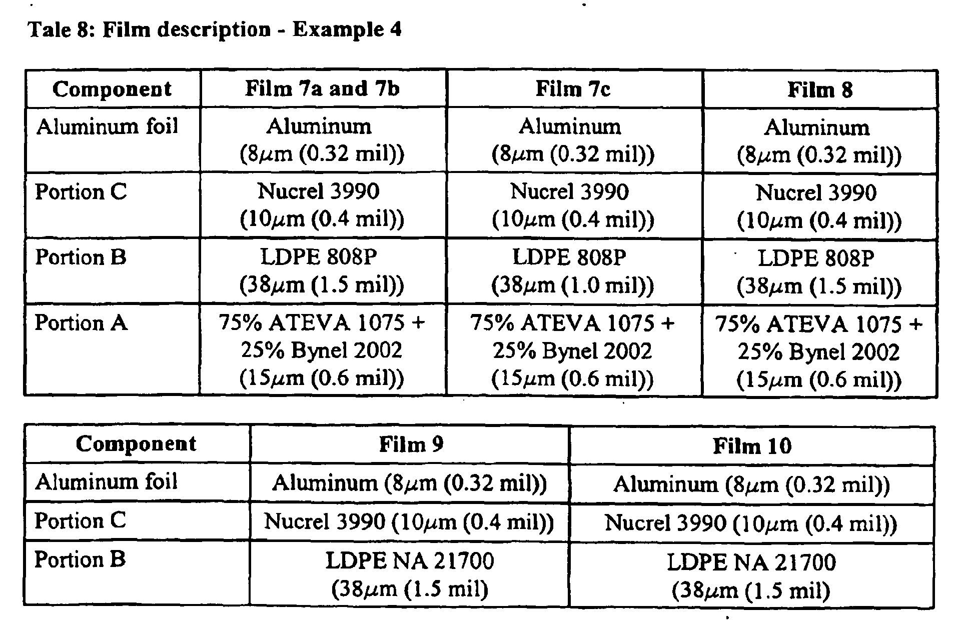

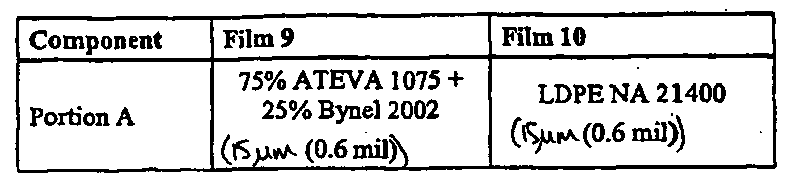

Each of these six films were laminated on OSB panels using the following conditions: 7.6 bar (110 Psi) 105°C/"stacking phase". These lamination conditions provided a very good level of adhesion.

Recognizing that the effect of ageing on adhesion strength is important to the use of the reflective films of the present invention, since the reflective film is used for construction purposes and then must be suitable for years, two different ageing tests were developed to confirm the utility of the reflective films. These two ageing tests were developed taking into account the main ageing factors that can affect adhesion performance, such as humidity, heat, cycling fatigue.

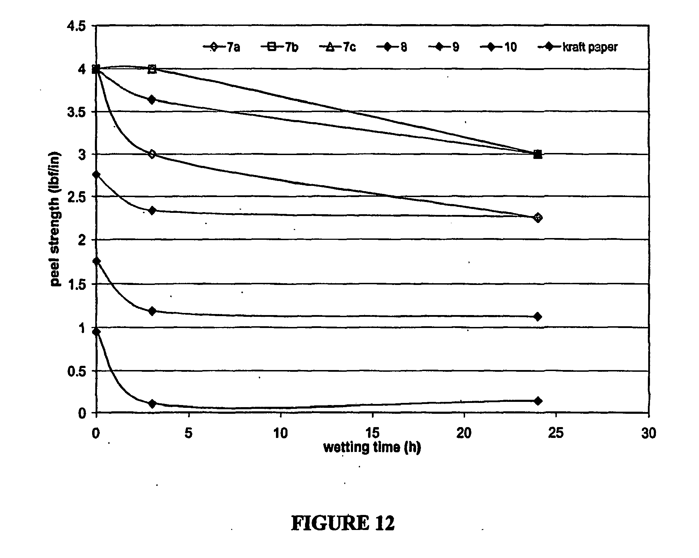

The first ageing test was mainly focussed on studying the effect of water penetration in the OSB panels. Thus, panels were completely immersed in water for a period of 24 hours. Peeling tests were performed inside this period of time to study the effect of total immersion on adhesion of the reflective film onto the wood board. The decrease of adhesion performance against time is plotted and illustrated in Figure 12.

As a result, it was found that reflective film consisting in Aluminum foil supported by polymeric film exhibits better adhesion performance than reflective film consisting of. Aluminum foil supported by kraft paper. With the exception of Film 10, adhesion strength of reflective film consisting of Aluminum foil supported by polymeric film after 24 hours of immersion was at least 2.5 times higher than original adhesion strength of reflective film consisting of Aluminum foil supported by kraft paper. Film 10, using simple polyethylene, layer as portion A, gave similar adhesion strength after 24 hours immersion to that observed for reflective film consisting of Aluminum foil supported by graft paper. This specific aging studying proved that the reflective films of the present invention, consisting of Aluminum foil supported by polymeric film, are less sensitive to humidity than reflective film consisting of Aluminum foil supported by kraft paper.

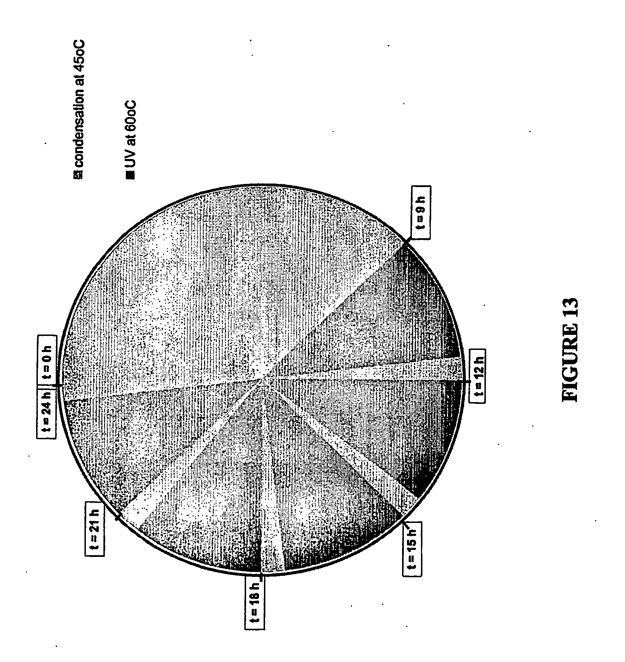

The other ageing test combined different factors, including heat and moisture effects on the adhesion performance. This test requires the use of a well-known ageing apparatus developed by the company Q-panel, named Q-UV^{®}. It allows evaluation of the influence of an ageing cycle of 24 hours comprising many condensation phases and heating phases by UV (Ultra-Violet) lamps. The repeated daily ageing cycle is illustrated on Figure 13. It consists of a first 9 hour condensation phase at 45°C followed by 5 sub-cycles of 3 hours, each consisting of 2.5 hours of UV heating at 60°C and 0.5 hour of condensation at 45°C.

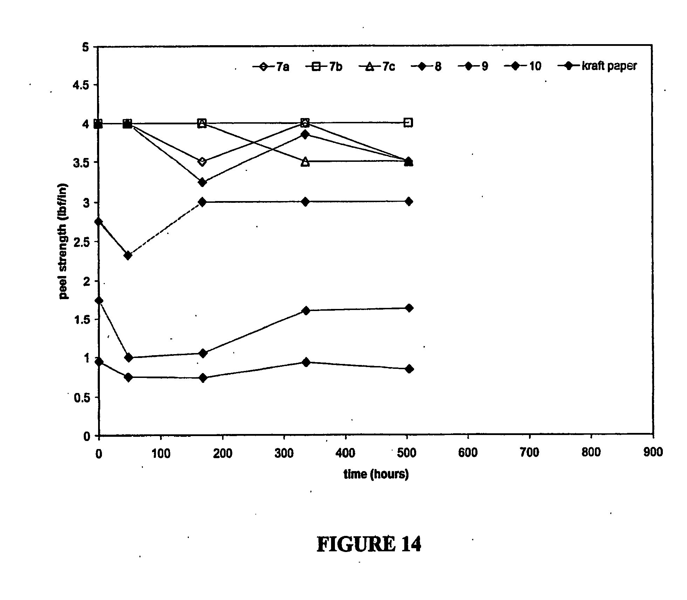

The results of the ageing effect on adhesion strength of reflective films laminated on OSB panels are presented in Figure 14. This testing demonstrated a good stability of adhesion without significant decrease over time. The reflective film consisting of Aluminum foil supported by polymeric film exhibited a higher adhesion than reflective film consisting of Aluminum foil supported by kraft paper. Adhesion for film 7a, 7b, 7c, 8 and 9 was at least 2.5 times higher than reflective film consisting of Aluminum foil supported by kraft paper, in whereas film 10, using a simple low density polyethylene layer as Portion A, adhesion was 1.5 times higher.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A reflective film for adhesion to a construction material, which reflective film comprises a layer of converter grade Aluminum foil having a thickness of between about 0.00635 µm (0.00025 mil) and about 51 µm (2 mil) adhered to one surface of a polymer film or film composite, said polymer film or film composite having a surface energy of at least 350 µN (35 dynes) and consisting of:
(a) a first outer portion suitable for adhesion to the construction material consisting of either
(1) one or more layers of :
(i) a metallocene-catalyzed polyethylene with density below 0.907 g/cm³ and a melt index between 0.5 and 30 g/10 min;
(ii) an ethylene vinyl acetate copolymer (EVA) having a vinyl acetate content between 2 and 30 % and a melt index between 0.5 and 30 g/10 min;
(iii) an acid/acrylate or anhydride modified ethylene vinyl acetate copolymer having a melt index between 0.5 and 30 g/10 min;
(iv) an acid or anhydride modified ethylene acrylate copolymer having a melt index between 0.5 and 30 g/10 min;
(v) an ethylene butyl-, ethyl-or methyl-acrylate copolymer (EBA, EEA or EMA) having a melt index between 0.5 and 30 g/10 min;
(vi) a terpolymer of ethylene, butyl-acrylate and glycidylmethacrylate (E/nBA/GMA) having a melt index between 0.5 and 30 g/10 min;
(vii) an ethylene acrylic acid and methacrylic acid copolymer having a melt index between 0.5 and 30 g/10 min ;
(viii) an ionomer of ethylene, methacrylic acid (E/MAA) having a melt index between 0.5 and 30 g/10 min;
(ix) a maleic anhydride grafted polyethylene or ethylene copolymer having a melt index between 0.5 and 30 g/10 min;
(x) a combination of one or more of (i), (ii), (iii), (iv), (v), (vi), (vii), (viii), or (ix),
alone or blended with between 0 and 80 % low density polyethylene or linear low density polyethylene having a melt index between 0.3 and 30 g/10 min; or
(2) one or more layers of linear low density polyethylene having a melt index between 0.3 and 30 g/10 min alone or blended with between 0 and 80 % by low density polyethylene; and
(b) a second outer portion adhered to the layer of Aluminum foil and consisting of one or more layers of:
(i) an ethylene acrylic acid and methacrylic acid copolymer having a melt index between 0.5 and 30 g/10 min;
(ii) an ionomer of ethylene, methacrylic acid (E/MAA) having a melt index between 0.5 and 30 g/10 min;
(iii) a maleic anhydride grafted polyethylene or ethylene copolymer having a melt index between 0.5 and 30 g/10 min;
(iv) a low density polyethylene having a melt index between 0.3 and 30 g/10 min ; or
(v) a combination of one or more of (i), (ii), (iii) or (iv).

2. The reflective film according to claim 1, which comprises a polymer film that additionally includes a middle portion consisting of one or more layers of:
(i) a low density polyethylene with a melt index between 0.3 and 30 g/10 min ;
(ii) a linear low density polyethylene with a density below 0.930 g/cm³ and a melt index between 0.3 and 30 g/10 min;
(iii) a polyethylene with a density above 0.930 g/cm³ and a melt index between and 30 g/10 min ;
(iv) an ethylene vinyl acetate copolymer having a vinyl acetate content between 2 and 30 % and a melt index between 0.5 and 30 g/10 min;
(v) a polypropylene;
(vi) any combination of two or more of (i), (ii), (iii), (iv) or (v).

3. The reflective film according to claim 2, wherein the middle layer is formulated to provide heat resistance.

4. The reflective film according to claim 3, wherein the middle layer additionally comprises high density polyethylene or polypropylene resin.

5. The reflective film according to claim 1, which comprises a polymer film composite that additionally includes a middle portion consisting of one or more layers of kraft paper.

6. The reflective film according to any one of claims 1 to 5, wherein one or more layers of the polymer film or film composite additionally comprises a slip agent or an anti-block agent.

7. The reflective film according to any one of claims 1 to 6, wherein both of the outer surfaces of the polymer film or film composite have been corona, ozone or flame treated in order to obtain the surface energy of at least 350 µN (35 dynes).

8. The reflective film according to any one of claims 1 to 7, wherein the layer of Aluminum foil is adhered to the polymer film or film composite either:
(i) via extrusion laminating of the film to the foil;
(ii) using a heat and pressure laminator and a method comprising annealing, heating and pressing the film onto the foil and cooling the resultant reflective films;
(iii) using a solvent or solvent-free lamination system using an adhesive; or
(iv) using a thermal, UV or E-beam curable adhesive and/or an epoxy- or polyurethane-based adhesive.

9. The reflective film according to any one of claims 1 to 7, wherein the layer of Aluminum foil is sprayed with a light coating of primer and cured before being adhered to the polymer film or film composite.

10. The reflective film according to any one of claims 1 to 9, wherein the layer of Aluminum foil has a plurality of perforations therethrough.

11. A composite material comprising the reflective film as defined in any one of claims 1 to 10 laminated to one side of a construction material, wherein the polymer film or film composite is directly adhered to the construction material such that the layer of Aluminum foil forms a surface of the composite material.

12. The composite material according to claim 11, wherein the construction material is an oriented strand board, a lumber based product, a fibreboard or a structural or non-structural plastic.

13. The composite material according to claim 11 or 12, wherein the reflective film is thermo-laminated to the construction material using heat and pressure.

14. A method of manufacturing a composite material comprising the step of thermo-laminating the reflective film as defined in any one of claims 1 to 10 to one side of a construction material such that the layer of Aluminum foil forms a surface of the composite material.

15. The method according to claim 14, wherein the construction material is an oriented strand board, a lumber based product, a fibreboard or a structural or non-structural plastic.

## Patentansprüche

1. Reflektierender Film zum adhäsiven Anbringen auf ein Bau- bzw. Konstruktionsmaterial, wobei der reflektierende Film eine Schicht aus einer Aluminiumfolie mit Umwandlungsqualität mit einer Dicke zwischen etwa 0,00635 µm (0,00025 mil) und etwa 51 µm (2 mil), die auf einer Oberfläche eines Polymerfilms oder eines Polymerfilmverbunds haftet, umfasst, wobei der Polymerfilm oder der Polymerfilmverbund eine Oberflächenenergie von mindestens 350 µN (35 dyn) aufweist und besteht aus:
(a) einem ersten äußeren Abschnitt, der zum adhäsiven Anbringen auf das Bau- bzw. Konstruktionsmaterial geeignet ist, bestehend aus entweder
(1) einer oder mehreren Schicht(en) aus:
(i) einem Metallocen-katalysierten Polyethylen mit einer Dichte unter 0,907 g/cm³ und einem Schmelzindex zwischen 0,5 und 30 g/10 min,
(ii) einem Ethylen-Vinylacetat-Copolymer (EVA) mit einem Vinylacetatgehalt zwischen 2 und 30 % und einem Schmelzindex zwischen 0,5 und 30 g/10 min,
(iii) einem Säure/Acrylat- oder Anhydrid-modifizierten Ethylen-Vinylacetat-Copolymer mit einem Schmelzindex zwischen 0,5 und 30 g/10 min,
(iv) einem Säure- oder Anhydrid-modifizierten Ethylenacrylat-Copolymer mit einem Schmelzindex zwischen 0,5 und 30 g/10 min,
(v) einem Ethylen-Butyl-, -Ethyl- oder -Methylacrylat-Copolymer (EBA, EEA oder EMA) mit einem Schmelzindex zwischen 0,5 und 30 g/10 min,
(vi) einem Terpolymer von Ethylen, Butylacrylat und Glycidylmethacrylat (E/nBA/GMA) mit einem Schmelzindex zwischen 0,5 und 30 g/10 min,
(vii) einem Ethylen-Acrylsäure- und -Methacrylsäure-Copolymer mit einem Schmelzindex wischen 0,5 und 30 g/10 min,
(viii) einem Ionomer aus Ethylen, Methacrylsäure (E/MAA) mit einem Schmelzindex zwischen 0,5 und 30 g/10 min,
(ix) einem Maleinsäureanhydrid-gepfropften Polyethylen oder Ethylen-Copolymer mit einem Schmelzindex zwischen 0,5 und 30 g/10 min,
(x) einer Kombination von einem oder mehreren von (i), (ii), (iii), (iv), (v), (vi), (vii), (viii) oder (ix), allein oder gemischt mit zwischen 0 und 80 % Polyethylen mit niedriger Dichte oder linearem Polyethylen mit niedriger Dichte mit einem Schmelzindex zwischen 0,3 und 30 g/10 min, oder
(2) einer oder mehreren Schicht(en) aus einem linearen Polyethylen mit niedriger Dichte mit einem Schmelzindex zwischen 0,3 und 30 g/10 min allein oder gemischt mit zwischen 0 und 80 % Polyethylen mit niedriger Dichte, und
(b) einem zweiten äußeren Abschnitt, der an der Schicht aus der Aluminiumfolie anhaftet und aus einer oder mehreren Schicht(en) aus
(i) einem Ethylen-Acrylsäure- und -Methacrylsäure-Copolymer mit einem Schmelzindex zwischen 0,5 und 30 g/10 min,
(ii) einem Ionomer aus Ethylen, Methacrylsäure (E/MAA) mit einem Schmelzindex zwischen 0,5 und 30 g/10 min,
(iii) einem Maleinsäureanhydrid-gepfropften Polyethylen oder Ethylen-Copolymer mit einem Schmelzindex zwischen 0,5 und 30 g/10 min,
(iv) einem Polyethylen mit niedriger Dichte mit einem Schmelzindex zwischen 0,3 und 30 g/10 min, oder
(v) einer Kombination von einem oder mehreren von (i), (ii), (iii) oder (iv) besteht.

2. Reflektierender Film nach Anspruch 1, der einen Polymerfilm umfasst, der zusätzlich einen Mittelabschnitt umfasst, der aus einer oder mehreren Schicht(en) von:
(i) einem Polyethylen mit niedriger Dichte mit einem Schmelzindex zwischen 0,3 und 30 g/10 min,
(ii) einem linearen Polyethylen mit niedriger Dichte mit einer Dichte unter 0,930 g/cm³ und einem Schmelzindex zwischen 0,3 und 30 g/10 min,
(iii) einem Polyethylen mit einer Dichte über 0,930 g/cm³ und einem Schmelzindex zwischen 0,3 und 30 g/10 min,
(iv) einem Ethylen-Vinylacetat-Copolymer mit einem Vinylacetatgehalt zwischen 2 und 30 % und einem Schmelzindex zwischen 0,5 und 30 g/10 min,
(v) einem Polypropylen,
(vi) jedweder Kombination von zwei oder mehr von (i), (ii), (iii), (iv) oder (v) besteht.

3. Reflektierender Film nach Anspruch 2, bei dem die Mittelschicht so formuliert ist, dass sie eine Wärmebeständigkeit bereitstellt.

4. Reflektierender Film nach Anspruch 3, bei dem die Mittelschicht zusätzlich ein Polyethylen- oder Polypropylenharz mit hoher Dichte umfasst.

5. Reflektierender Film nach Anspruch 1, der einen Polymerfilmverbund umfasst, der zusätzlich einen Mittelabschnitt umfasst, der aus einer oder mehreren Schicht(en) von Kraftpapier besteht.

6. Reflektierender Film nach einem der Ansprüche 1 bis 5, bei dem eine oder mehrere Schicht(en) des Polymerfilms oder des Polymerfilmverbunds zusätzlich ein Gleitmittel oder ein Antiblockmittel umfasst bzw. umfassen.

7. Reflektierender Film nach einem der Ansprüche 1 bis 6, bei dem beide äußeren Oberflächen des Polymerfilms oder des Polymerfilmverbunds korona-, ozon- oder flammenbehandelt worden sind, um die Oberflächenenergie von mindestens 350 µN (35 dyn) zu erhalten.

8. Reflektierender Film nach einem der Ansprüche 1 bis 7, bei dem die Schicht aus der Aluminiumfolie an den Polymerfilm oder den Polymerfilmverbund entweder
(i) mittels Extrusionslaminieren des Films an die Folie,
(ii) unter Verwendung eines Wärme- und Druck-Laminiergeräts und eines Verfahrens, das Tempern, Erwärmen und Pressen des Films auf die Folie und Abkühlen des resultierenden reflektierenden Films umfasst,
(iii) unter Verwendung eines Lösungsmittellaminiersystems oder eines lösungsmittelfreien Laminiersystems unter Verwendung eines Haftmittels oder
(iv) unter Verwendung eines thermisch härtbaren, UV- oder E-Strahl-härtbaren Haftmittels und/oder eines Haftmittels auf Epoxy- oder Polyurethanbasis
anhaften gelassen wird.

9. Reflektierender Film nach einem der Ansprüche 1 bis 7, bei dem die Schicht aus der Aluminiumfolie mit einer dünnen Beschichtung eines Haftvermittlers besprüht und diese gehärtet wird, bevor sie an den Polymerfilm oder den Polymerfilmverbund anhaften gelassen wird.

10. Reflektierender Film nach einem der Ansprüche 1 bis 9, bei dem die Schicht aus der Aluminiumfolie eine Mehrzahl von Perforationen durch diese aufweist.

11. Verbundmaterial, das den reflektierenden Film gemäß der Definition in einem der Ansprüche 1 bis 10 umfasst, der auf eine Seite eines Bau- bzw. Konstruktionsmaterials laminiert ist, wobei der Polymerfilm oder der Polymerfilmverbund derart direkt an das Bau- bzw. Konstruktionsmaterial adhäsiv angebracht wird, dass die Schicht aus der Aluminiumfolie eine Oberfläche des Verbundmaterials bildet.

12. Verbundmaterial nach Anspruch 11, bei dem das Bau- bzw. Konstruktionsmaterial eine Flachpressplatte aus orientiert gestreuten Mikrofurnieren ("Oriented Strand Board", "OSB"), ein Produkt auf der Basis von Holz, eine Faserplatte oder ein Kunststoff für Bauzwecke oder nicht-Bauzwecke ist.

13. Verbundmaterial nach Anspruch 11 oder 12, bei dem der reflektierende Film unter Verwendung von Wärme und Druck auf das Bau- bzw. Konstruktionsmaterial thermolaminiert worden ist.

14. Verfahren zur Herstellung eines Verbundmaterials, umfassend den Schritt des Thermolaminierens des reflektierenden Films, wie er in einem der Ansprüche 1 bis 10 definiert ist, auf eine Seite eines Bau- bzw. Konstruktionsmaterials, so dass die Schicht aus der Aluminiumfolie eine Oberfläche des Verbundmaterials bildet.

15. Verfahren nach Anspruch 14, bei dem das Bau- bzw. Konstruktionsmaterial eine Flachpressplatte aus orientiert gestreuten Mikrofurnieren ("Oriented Strand Board", "OSB"), ein Produkt auf der Basis von Holz, eine Faserplatte oder ein Kunststoff für Bauzwecke oder nicht-Bauzwecke ist.

## Revendications

1. Film réfléchissant conçu pour adhérer à un matériau de construction, lequel film réfléchissant comprend une couche constituée d'une feuille d'aluminium de qualité convertisseur, épaisse d'environ 0,00635 à environ 51 µm (0,00025 à 2 millièmes de pouce), qu'on a fait adhérer à l'une des surfaces d'un film en polymère ou d'un composite de films en polymères, lequel film ou composite de films en polymère(s) présente une énergie de surface d'au moins 350 µN (35 dynes) et est constitué :
a) d'une première partie externe, appropriée pour adhérer au matériau de construction et constituée :
1) soit d'une ou plusieurs couches des polymères suivants :
i) un polyéthylène issu d'une catalyse par métallocène, dont la masse volumique est inférieure à 0,907 g/cm³ et dont l'indice de fluidité à chaud vaut de 0,5 à 30 g/10 min,
ii) un copolymère d'éthylène et d'acétate de vinyle (EVA), qui est constitué d'acétate de vinyle pour 2 à 30 % et dont l'indice de fluidité à chaud vaut de 0,5 à 30 g/10 min,
iii) un copolymère d'éthylène et d'acétate de vinyle, modifié par un acide et un acrylate ou un anhydride, dont l'indice de fluidité à chaud vaut de 0,5 à 30 g/10 min,
iv) un copolymère d'éthylène et d'acrylate, modifié par un acide ou un anhydride, dont l'indice de fluidité à chaud vaut de 0,5 à 30 g/10 min,
v) un copolymère d'éthylène et d'acrylate de butyle, d'éthyle ou de méthyle (EBA, EEA ou EMA), dont l'indice de fluidité à chaud vaut de 0,5 à 30 g/10 min,
vi) un terpolymère d'éthylène, d'acrylate de butyle et de méthacrylate de glycidyle (E/nBA/GMA), dont l'indice de fluidité à chaud vaut de 0,5 à 30 g/10 min,
vii) un copolymère d'éthylène, d'acide acrylique et d'acide méthacrylique, dont l'indice de fluidité à chaud vaut de 0,5 à 30 g/10 min,
viii) un copolymère ionomère d'éthylène et d'acide méthacrylique (E/MAA), dont l'indice de fluidité à chaud vaut de 0,5 à 30 g/10 min,
ix) un polyéthylène ou un copolymère d'éthylène sur lequel a été greffé de l'anhydride maléique, dont l'indice de fluidité à chaud vaut de 0,5 à 30 g/10 min,
x) ou une combinaison de l'un ou plusieurs de ces polymère (i), (ii), (iii), (iv), (v), (vi), (vii), (viii) et (ix),
seuls ou mélangés avec 0 à 80 % d'un polyéthylène basse densité ou d'un polyéthylène basse densité linéaire, dont l'indice de fluidité à chaud vaut de 0,3 à 30 g/10 min ;
2) soit d'une ou plusieurs couches d'un polyéthylène basse densité linéaire dont l'indice de fluidité à chaud vaut de 0,3 à 30 g/10 min, seul ou mélangé avec 0 à 80 % d'un polyéthylène basse densité ;
b) et d'une deuxième partie externe, qui adhère à la feuille d'aluminium et qui est constituée d'une ou de plusieurs couches des polymères suivants :
i) un copolymère d'éthylène, d'acide acrylique et d'acide méthacrylique, dont l'indice de fluidité à chaud vaut de 0,5 à 30 g/10 min,
ii) un copolymère ionomère d'éthylène et d'acide méthacrylique (E/MAA), dont l'indice de fluidité à chaud vaut de 0,5 à 30 g/10 min,
iii) un polyéthylène ou un copolymère d'éthylène sur lequel a été greffé de l'anhydride maléique, dont l'indice de fluidité à chaud vaut de 0,5 à 30 g/10 min,
iv) un polyéthylène basse densité dont l'indice de fluidité à chaud vaut de 0,3 à 30 g/10 min,
v) ou une combinaison de l'un ou plusieurs de ces polymères (i), (ii), (iii) et (iv).

2. Film réfléchissant conforme à la revendication 1, qui comprend un film en polymères contenant en outre une partie centrale formée d'une ou de plusieurs couches des polymères suivants :
i) un polyéthylène basse densité dont l'indice de fluidité à chaud vaut de 0,3 à 30 g/10 min,
ii) un polyéthylène basse densité linéaire dont la masse volumique est inférieure à 0,930 g/cm³ et dont l'indice de fluidité à chaud vaut de 0,3 à 30 g/10 min,
iii) un polyéthylène dont la masse volumique est supérieure à 0,930 g/cm³ et dont l'indice de fluidité à chaud vaut de 0,3 à 30 g/10 min,
iv) un copolymère d'éthylène et d'acétate de vinyle, qui est constitué d'acétate de vinyle pour 2 à 30 % et dont l'indice de fluidité à chaud vaut de 0,5 à 30 g/10 min,
v) un polypropylène,
vi) ou toute combinaison de l'un ou plusieurs de ces polymères (i), (ii), (iii), (iv) et (v).

3. Film réfléchissant conforme à la revendication 2, dans lequel la formulation de la couche centrale est conçue pour apporter de la tenue à la chaleur.

4. Film réfléchissant conforme à la revendication 3, dans lequel la couche centrale comprend en outre un polyéthylène haute densité ou une résine de polypropylène.

5. Film réfléchissant conforme à la revendication 1, qui comprend un composite de films en polymères qui contient en outre une partie centrale constituée d'une ou de plusieurs couches de papier kraft.

6. Film réfléchissant conforme à l'une des revendications 1 à 5, dans lequel une ou plusieurs couches du film ou du composite de films en polymère(s) comprend en outre un agent de glissance ou un agent empêchant l'adhérence de contact entre feuilles.

7. Film réfléchissant conforme à l'une des revendications 1 à 6, dans lequel les deux surfaces externes du film ou du composite de films en polymère(s) ont été soumises, pour présenter une énergie de surface d'au moins 350 µN (35 dynes), à un traitement par effet corona, à l'ozone ou à la flamme.

8. Film réfléchissant conforme à l'une des revendications 1 à 7, pour lequel on a fait adhérer la couche constituée d'une feuille d'aluminium au film ou au composite de films en polymère(s) :
i) par extrusion-couchage du film sur la feuille ;
ii) à l'aide d'un appareil de couchage à chaud et sous pression, suivant un procédé comportant les opérations de recuit et chauffage du film, de pressage de ce film sur la feuille d'aluminium, et de refroidissement du film réfléchissant ainsi obtenu ;
iii) au moyen d'un système de couchage au solvant ou sans solvant, mais avec adhésif ;
iv) ou à l'aide d'un adhésif durcissable sous l'action de la chaleur, de rayons ultraviolets ou d'un faisceau d'électrons, et/ou d'un adhésif à base de polyuréthane ou de résine époxy.

9. Film réfléchissant conforme à l'une des revendications 1 à 7, pour lequel on a appliqué par pulvérisation, sur la couche constituée d'une feuille d'aluminium, un léger revêtement d'enduit primaire que l'on a fait durcir avant d'y faire adhérer le film ou le composite de films en polymère(s).

10. Film réfléchissant conforme à l'une des revendications 1 à 9, dans lequel la feuille d'aluminium est perforée de multiples trous.

11. Matériau composite comprenant un film réfléchissant, conforme à l'une des revendications 1 à 10, stratifié sur une face d'un matériau de construction, dans lequel le film ou le composite de films en polymère(s) adhère directement au matériau de construction, de telle sorte que la feuille d'aluminium constitue une surface du matériau composite.

12. Matériau composite conforme à la revendication 11, dans lequel le matériau de construction est un panneau de grandes particules orientées, un produit à base de bois, un panneau de fibres ou un matériau plastique conçu ou non pour un élément de structure.

13. Matériau composite conforme à la revendication 11 ou 12, dans lequel le film réfléchissant a été thermo-couché, à chaud et sous pression, sur le matériau de construction.

14. Procédé de fabrication d'un matériau composite, comprenant une étape de thermo-couchage d'un film réfléchissant, conforme à l'une des revendications 1 à 10, sur une face d'un matériau de construction, effectuée de telle sorte que la feuille d'aluminium constitue une surface du matériau composite.

15. Procédé conforme à la revendication 14, dans lequel le matériau de construction est un panneau de grandes particules orientées, un produit à base de bois, un panneau de fibres ou un matériau plastique conçu ou non pour un élément de structure.
